# EUROPEAN PATENT SPECIFICATION

(11) **EP 4 353 068 B1**
(45) Date of publication and mention of the grant of the patent: **27.05.2026**
(21) Application number: 23201106.4
(22) Date of filing: 02.10.2023
(51) Int. Cl.: A01D 41/127, A01D 41/14, A01D 45/02, A01B 76/00

(54) **SYSTEMS AND METHODS FOR AUTOMATED DECK PLATE CONTROL BASED ON FEEDBACK AND PREDICTION**
SYSTEME UND VERFAHREN ZUR AUTOMATISIERTEN DECKPLATTENSTEUERUNG AUF DER BASIS VON FEEDBACK UND VORHERSAGE
SYSTÈMES ET PROCÉDÉS DE COMMANDE AUTOMATISÉE DE PLAQUES DE PONT SUR LA BASE D'UN FEEDBACK ET D'UNE PRÉDICTION

(30) Priority: 13.10.2022 US 202263415833 P; 30.03.2023 US 202318193186
(43) Date of publication of application: 17.04.2024
(73) Proprietor: Deere & Company, Moline, IL 61265 (US)
(72) Inventor: Heims, Troy M., Mannheim (DE); Nathan E., Krehbiel, Mannheim (DE); Duane M., Bomleny, Mannheim (DE); Hammer, Curtis R., Mannheim (DE); Vandike, Nathan R., Mannheim (DE); Chandrasekaran, Meghna, Mannheim (DE)
(74) Representative: Holst, Sönke

(56) References cited:
- US-A1- 2020 323 133
- US-A1- 2021 318 118
- US-A1- 2022 110 257
- US-A1- 2022 113 161

## Description

The present description relates mobile agricultural harvesting machines configured to harvest at a field.

### BACKGROUND

There are a wide variety of different mobile agricultural machines. One such mobile agricultural machine is a mobile agricultural harvesting machine. The mobile agricultural harvesting machine can be a combine with a header, such as a corn header. The corn header includes a plurality of row units, each row unit includes crop processing functionality that gathers the corn towards the header, severs the stalk, and captures the corn ears. The corn ears are then conveyed further back into the agricultural harvesting machine for further processing.

US 2022/0113161 A1, considered as generic, describes a harvesting machine with a control system receiving a map with predicted corn stalk diameters including a confidence level indicating an accuracy with which the predictive values on the predictive map conform to measured values that may be measured by sensors on the harvester as it moves through the field. The confidence level is presented to an operator. The stalk diameter from the predictive map is used to control the deck plate position of the corn header.

### SUMMARY

The present invention is defined by the claims. In-situ stalk diameter sensor data is obtained by an agricultural harvesting system. Predictive stalk diameter data that provides predictive stalk diameter values at different locations in a worksite is obtained by the agricultural harvesting system. The agricultural harvesting system determines a confidence level of the stalk diameter sensor data and a confidence level of the predictive stalk diameter data. The agricultural harvesting system selects one of the stalk diameter sensor data or the predictive stalk diameter data to use for control based on the confidence level of the stalk diameter sensor data and the confidence level of the predictive stalk diameter data. The selected data can be used to control a mobile agricultural harvesting machine, such as controlling one or more deck plates of the mobile agricultural harvesting machine.

### BRIEF DESCRIPTION OF THE DRAWINGS

FIG. 1 illustrates one example of a mobile agricultural harvesting machine.
FIG. 2 illustrates one example of the header of the agricultural harvesting machine shown in FIG. 1
FIG. 3 illustrates one example of the header of the agricultural harvesting machine shown in FIG. 1.
FIG. 4 is a block diagram showing some portions of an agricultural harvesting system, including a mobile agricultural harvesting machine, in more detail, according to some examples of the present disclosure.
FIG. 5 is a block diagram showing one example of a confidence system.
FIG. 6 is a block diagram showing one example of a predictive model generator and predictive map generator.
FIGS. 7A-7B (collectively referred to herein as FIG. 7) show a flow diagram illustrating one example of operation of an agricultural harvesting system in generating a map.
FIGS. 8A-8B (collectively referred to herein as FIG. 8) show a flow diagram illustrating one example of operation of an agricultural harvesting system in controlling a mobile agricultural harvesting machine.
FIG. 9 is a pictorial illustration showing one example of an agricultural harvesting environment.
FIG. 10 is a pictorial illustration showing one example of an agricultural harvesting environment.
FIG. 11 is a pictorial illustration showing one example of an agricultural harvesting environment.
FIG. 12 is a block diagram showing one example of a mobile agricultural harvesting machine in communication with a remote server environment.
FIGS. 13-15 show examples of mobile devices that can be used in an agricultural harvesting system.
FIG. 16 is a block diagram showing one example of a computing environment that can be used in an agricultural harvesting system.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended.

In some examples, the present description relates to using in-situ data taken concurrently with an operation, such as an agricultural harvesting operation, in combination with prior or predicted data, such as prior or predicted data represented in a map, to generate a predictive model and a predictive map, such as a predictive stalk diameter model and a predictive stalk diameter map. In some examples, the predictive stalk diameter map can be used to control a mobile agricultural harvesting machine, for instance, to control deck plates of the mobile agricultural harvesting machine.

A mobile agricultural harvesting machine can include a combine and a header, such as a corn header. The corn header includes a plurality of row units spaced apart along the width of the header. Each row unit can include, among other things, a set of deck plates (also known as stripper plates), a set of crop gathering components, such as a set of gathering chains, as well a set of rollers. Two row units act in unison to gather corn plants towards the header, to sever the stalks, and to separate the corn ears from the corn plants. The gathering components gather the corn plant towards the header. The rollers, placed below the deck plates, pull the stalk down. The deck plates are controllably spaced apart, usually in a tapered fashion (narrower towards the front of the header and progressively wider moving rearward), and define a gap that should be wide enough to receive the crop stalk but narrow enough to prevent the corn ear (or a portion of the corn ear) from slipping through the gap. If the deck plates are not spaced apart enough, the crop may not be harvested or the gathering components and rollers may be overburdened due to the resistance caused by the deck plates. If the deck plates are spaced too far apart, the corn ears may slip between the deck plates and contact the rollers which can result in loss (sometimes referred to as butt shelling).

The agricultural harvesting machine can include stalk diameter sensors that sense the diameter of corn stalks gathered by the header and a controller that acts, in a closed loop fashion, to control the spacing of the deck plates based on data from the stalk diameter sensors. However, such systems can suffer from latency. For example, the system may not be able to adjust the spacing of the deck plates quickly enough to account for the width of sensed stalk. Further, a sensor on each row unit may be necessary to accurately account for the variance in stalk diameter across the width of the header. This additional sensor equipment increases the cost and complexity of the machine. Further, the sensors only sense the stalks they come in contact with and thus the controls may be unsuitable for subsequent crop.

Accordingly, systems and methods described herein provide for predictive control of the deck plates of the mobile agricultural harvesting machine.

In one example, the present description relates to obtaining a map such as a field boundary map. The field boundary map includes geolocated values of field boundary characteristics (field boundary characteristic values, sometimes referred to herein as field boundary values) across different locations at a field of interest, such as values indicative of the presence, the location, the directionality, and dimensions of field boundaries. The field boundary map, and the values therein, can be generated from aerial or other images of the field, from images or other sensor readings taken during a prior operation in the field, such as geographic location tracking data, fly-over or satellite-based sensor data, as well as data provided by a user or operator. These are merely examples. The field boundary map can be generated in a variety of other ways.

In one example, the present description relates to obtaining a map such as a field feature map. The field feature map includes geolocated values of field feature characteristics (field feature characteristic values, sometimes referred to herein as field feature values) across different locations at a field of interest, such as values indicative of the type, the presence, the location, the directionality, and the dimensions of field features, such as waterways, tramlines, residue piles, geologic features (e.g., large rocks), and various other features. The field feature map, and the values therein, can be generated from aerial or other images of the field, from images or other sensor reading taken during a prior operation in the field, from fly-over or satellite-based sensor data, as well as data provided by a user or operator. These are merely examples. The field feature map can be generated in a variety of other ways.

In one example, the present description relates to obtaining a map such as a crop genotype map. The crop genotype map includes geolocated values of crop genotype (crop genotype values) across different locations at a field of interest. The crop genotype values can indicate the genotype (e.g., species, hybrid, cultivar, etc.) of crop across different locations at the field of interest. The crop genotype map, and the values therein, can be generated based on sensor readings during a prior planting operation. For example, the planting machine(s) performing the prior planting operation may be outfitted with one or more sensors to detect the locational placement of crop seeds at the field. The sensor data from the prior planting operation, in combination with data indicative of the type of crop planted (which could be provided by an operator or a user or provided in other ways), can be used to generate the crop genotype map. The crop genotype map can be generated in a variety of other ways.

In one example, the present description relates to obtaining a map such as a crop population map. The crop population map includes geolocated values of crop population (crop population values) across different location at a field of interest. The crop population values can indicate the location and spacing of crop plants across different locations at the field of interest. The crop population map, and the values therein, can be generated based on sensor readings during a prior planting operation. For example, the planting machine(s) performing the prior planting operation may be outfitted with one or more sensors to detect the locational placement of crop seeds at the field. The crop population map can be generated in a variety of other ways.

In one example, the present description relates to obtaining a map such as a vegetative index (VI) map. The VI map includes geolocated VI values across different geographic locations in the field of interest. VI values may be indicative of vegetative growth or vegetation health, or both. One example of a vegetative index includes a normalized difference vegetation index (NDVI). There are many other vegetative indices that are within the scope of the present disclosure. In some examples, a vegetative index may be derived from sensor readings of one or more bands of electromagnetic radiation reflected by the plants or plant matter. Without limitations, these bands may be in the microwave, infrared, visible, or ultraviolet portions of the electromagnetic spectrum. A VI map can be used to identify the presence and location of vegetation (e.g., crop, weeds, other plant matter, etc.). The VI map may be generated prior to the current operation, such as after the most recent previous operation and prior to the current operation. The VI map can be generated in a variety of other ways.

In one example, the present description relates to obtaining a map such as a topographic map. The topographic map includes geolocated values of topographic characteristics (topographic characteristic values, sometimes referred to herein as topographic values) across different locations at a field of interest. For example, the topographic map can include elevation values indicative of the elevation of the field at various locations, as well as slope values indicative of the slope of the field at various locations. The topographic map, and the values therein, can be based on historical data, such as topographic data detected during previous operations at the worksite by the same mobile machine or by a different mobile machine. The topographic map, and the values therein, can be based on fly-over or satellite-based sensor data, such as lidar data of the worksite, as well as scouting data provided by a user or operator such as from a scouting operation of the worksite. The topographic map can be generated in a variety of other ways.

In one example, the present description relates to obtaining a map such as a soil type map. The soil type map includes geolocated values of soil type across different geographic locations in a field of interest. Soil type can refer to taxonomic units in soil science, wherein each soil type includes defined sets of shared properties. Soil types can include, for example, sandy soil, clay soil, silt soil, peat soil, chalk soil, loam soil, and various other soil types. Thus, the soil type map provides geolocated values of soil type at different locations in the field of interest which indicate the type of soil at those locations. The soil type map can be generated on the basis of data collected during another operation on the field of interest, for example, previous operations in the same season or in another season. The machines performing the previous operation can have on-board sensors that detect characteristics indicative of soil type. Additionally, operating characteristics, machine settings, or machine performance characteristics during previous operations can be indicative of soil type. In other examples, surveys of the field of interest can be performed, either by various machines with sensors such as imaging systems (e.g., an aerial survey) or by humans. For example, samples of the soil at the field of interest can be taken at one or more locations and observed or lab tested to identify the soil type at the different location(s). In some examples, third-party service providers or government agencies, for instance, the Natural Resources Conservation Services (NRCS), the United States Geological Survey (USGS), as well as various other parties may provide data indicative of soil type at the field of interest. These are merely examples. The soil type map can be generated in a variety of other ways.

These are just some examples of the types of maps that can be obtained by the agricultural system. In other examples, various other types of maps can be obtained.

The present discussion proceeds, in some examples, with respect to systems that obtain one or more maps of a worksite, such as one or more of a crop genotype map, a crop population map, a topographic map, a soil type map, and also use an in-situ sensor to detect stalk diameter. The systems generate a model that models a relationship between the values on the one or more obtained maps and the output values from the in-situ sensor. The model is used to generate a predictive stalk diameter map that predicts, for example, stalk diameter values to different geographic locations in the worksite. The predictive stalk diameter map, generated during an operation, can be presented to an operator or other user or used in automatically controlling a mobile agricultural harvesting machine during an operation, or both. In some examples, the predictive stalk diameter map can be used to control operating parameters of the mobile agricultural harvesting machine, such as the spacing of deck plates. For example, the spacing of the deck plates can be controlled based on the predictive stalk diameter values in the predictive stalk diameter map.

In some examples, the present discussion proceeds with respect to systems that obtain predictive stalk diameter data, such as a predictive stalk diameter map, for instance the predictive stalk diameter map discussed above or another type of predictive stalk diameter map. A confidence value of the predictive stalk diameter data can be determined based on predictive confidence criteria. The confidence value is indicative of an accuracy or reliability of the predictive stalk diameter data. Based on the confidence value, it can be determined if the predictive stalk diameter data is qualified for the purposes of automated control. If the predictive stalk diameter data is qualified for use in automated control, then the predictive stalk diameter data can be used to control operating parameters of the mobile agricultural harvesting machine, such as the spacing of deck plates. For example, the spacing of the deck plates can be controlled based on predictive stalk diameter values in the predictive stalk diameter data (e.g., predictive stalk diameter values in the predictive stalk diameter map). If the predictive stalk diameter data is not qualified for use in automated control, then automated control of the mobile agricultural harvesting machine can take other forms. For example, the automated control may take the form of a closed-loop feedback control system that control the spacing of the deck plates based on stalk diameter data generated by stalk diameter sensors. In other examples, the automated control may rely on stalk diameter values provided in other ways (such as historical stalk diameter values, stalk diameter values from the seed producer, etc.) as well as maps of the field, such as maps indicating the location and genotype of crop at the field.

In some examples, a confidence value of the stalk diameter sensor data can be determined based on sensor confidence criteria. The confidence value is indicative of an accuracy or reliability of the stalk diameter sensor data. Based on the confidence value, it can be determined if the stalk diameter sensor data are qualified for the purposes of automated control.

In some examples, the systems select one of the predictive stalk diameter data or the stalk diameter sensor data for purposes of automated control based on their respective confidence values. The system then automatically controls parameters of the harvester, such as the position (or spacing) of deck plates.

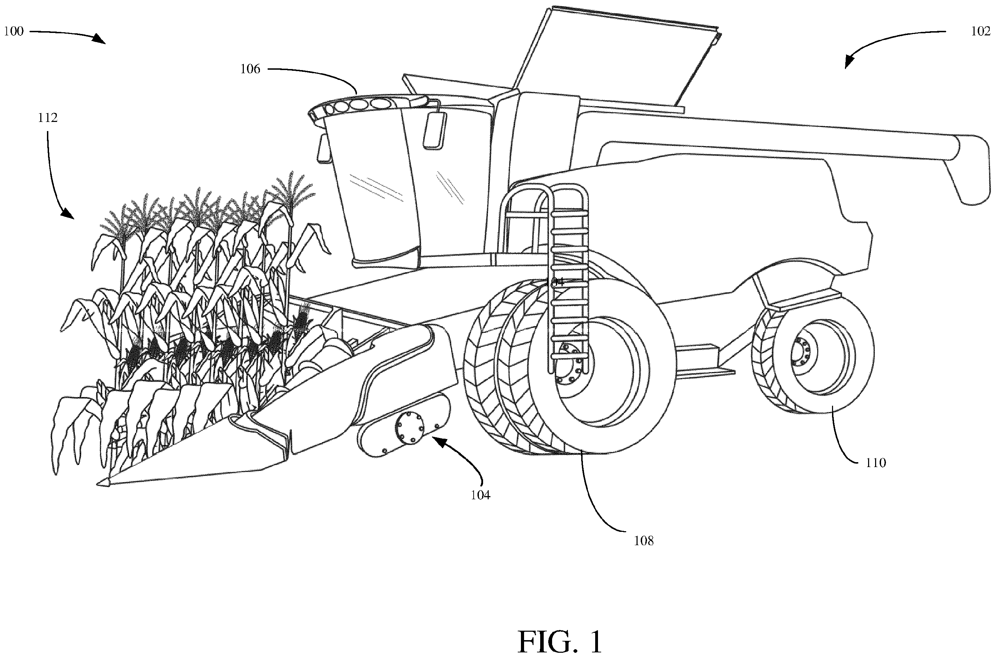

FIG. 1 is a perspective view that illustrates a mobile agricultural harvesting machine (or harvester) 100. Harvester 100 includes a self-propelled combine 102 and a header 104, coupled to the combine 102. Header 104 is illustratively a corn header and engages and processes corn plants 112 at a field as the harvester 100 travels. Header 104 will be shown in more detail below.

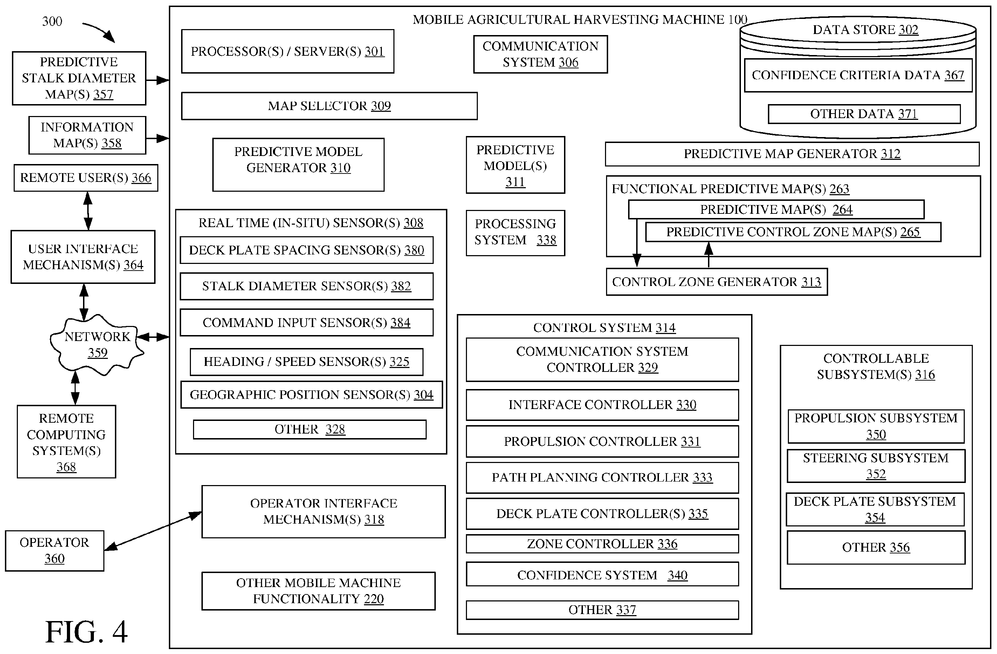

Combine 102 further includes a set of ground engaging traction elements, such as front wheels 108 and rear wheels 110. In other examples, one or both of the front wheels 108 and rear wheels 110 can comprise other types of ground engaging traction elements, such as tracks. In some examples, one of the front wheels 108 and rear wheels 110 are used to steer while the other are driven by a propulsion subsystem (e.g., 350 shown in FIG. 4) to propel the combine 102 across a field at which the harvester 100 operates. In the example illustrated, harvester 100 includes an operator compartment or cab 106, which can include a variety of different operator interface mechanisms (e.g., 318 shown in FIG. 4) for controlling harvester 100 as well as well as for displaying various information.

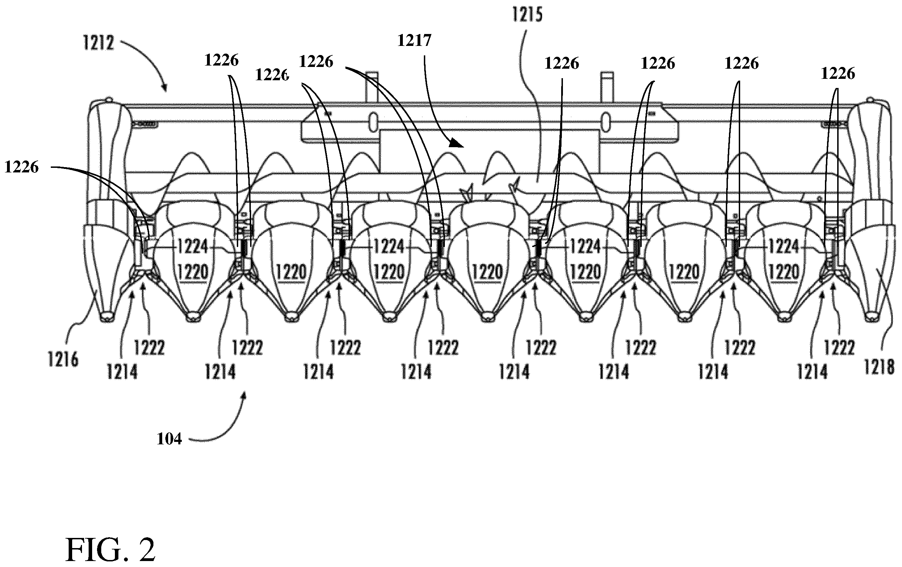

FIG. 2 is a front view of header 104. As illustrated in FIG. 2, header 104 includes a frame 1212, a cross-auger 1215, a feeder house 1217, a first end divider 1216, a second end divider 1218, a plurality of central dividers 1220, a plurality of row units 1214, a plurality of crop receiving passages 1222, a plurality of deck plates 1226, and a plurality of gaps (or throats) 1224. Each row unit 1214 includes either two central dividers 1220 or a central divider 1220 and an end divider (one of 1216 or 1218). Each row unit 1214 is configured to process corn plants from respective plant row. As the corn plants are received by the row units 1214 and proceed through respective crop receiving passages 1222, the stalks of the corn plants are severed and the corn ears are separated from the corn plants. The severed corn ears are conveyed to cross auger 1215 which rotates to convey the corn ears to feeder house 1217. The feeder house 1217 can include further crop conveyance components (such as a belt or elevator) which deliver the corn ears further into the harvester 100 for further processing. Each operative pair of deck plates 1226 are spaced apart to define a respective gap 1224 which form a portion of a respective crop receiving passage 1222. While not shown in FIG. 2, it will be understood that each row unit 1214 further includes a set of crop gather components (such as a set of gathering chains) and a set of rollers.

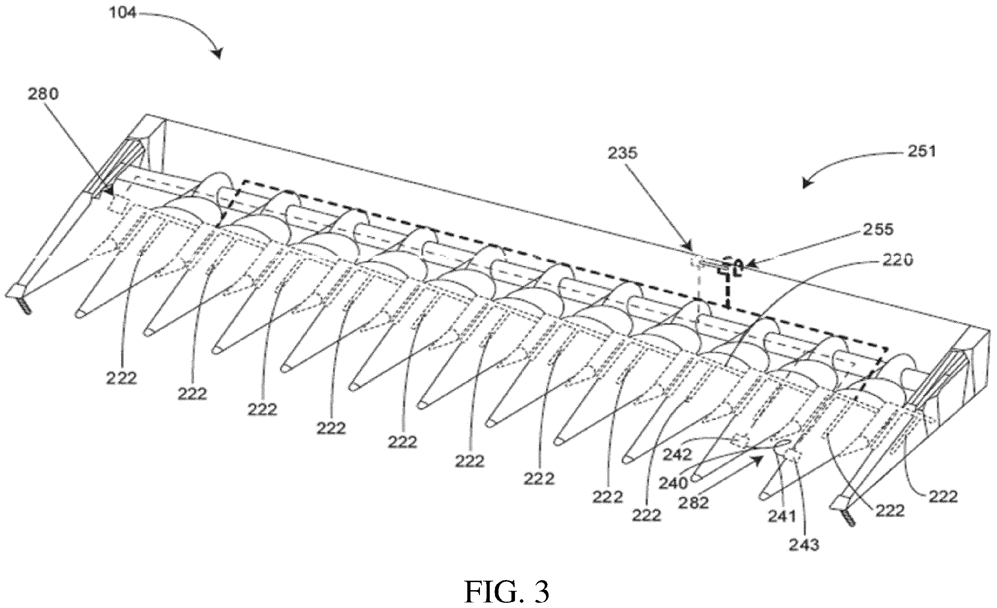

FIG. 3 is a pictorial illustration showing one example of header 104. As shown in FIG. 3, header 104 of mobile agricultural harvesting machine 100, includes a deck plate position sensor 280, a stalk diameter sensor 282, a deck plate controller 235, and a deck plate actuator assembly 251, (which includes a controllable valve 255, as well as fluid actuator, not shown in FIG. 3, which receives fluid from valve 255 to actuate). The stalk diameter sensor 282 is illustratively shown as a contact sensor, with one component (a first deflectable finger 240 and a first sensing device 242) disposed on a first side of the row unit and a second component (a second deflectable finger 241 and a second sensing device 243) disposed on a second side of the row unit. The deflectable fingers 240 and 241 contact the crop stalk and are displaced. The angular displacement of the first deflectable finger 240 is detected by the first sensing device 242 and the angular displacement of the second deflectable finger 241 is detected by the second sensing device 243. The sensing devices 242 and 243 generate an electrical signal based on the displacement. The electrical signal is indicative of the diameter of the crop stalk and is provided to the controller 235 which processes the electrical signal to identify a diameter of the crop stalk. In other examples, a digital output representative of the electrical signal can be generated, such as by an analog-to-digital converter, and can be provided to the controller 235, such as in the case of wireless communication between the stalk diameter sensor 282 and the controller 235. In one example, the first sensing device 242 and second sensing device 243 can comprise rotary encoders. In other examples, the sensing devices 242 and 243 can be other types of sensing devices. It will be understood that diameter, as used herein, refers to a width of the plant stalk, and more particularly a width of the plant stalk relative to the direction from which the stalk diameter sensor(s) detect the plant stalk. For example, plant stalks may be more ovular, as opposed to circular, and thus, the diameter, or width, being detected, may be different depending upon the direction from which the plant stalk is detected.

Based on the stalk diameter sensor data (e.g., signal(s)) generated by stalk diameter sensor 282, deck plate controller 235 generates a control signal to control a deck plate subsystem (e.g., 354 shown in FIG. 4) to adjust the position of the deck plates. The deck plate subsystem includes a deck plate actuator assembly 251 which includes a controllable fluid valve 255 (as well as a fluid actuator, such as a fluid cylinder, not shown in FIG. 3, which receives fluid from valve 255 to actuate and thereby actuate movement of linkage 220), linkage 220, a plurality of sub-linkages 222, as well as a plurality of actuatable deck plates (1226 shown in FIG. 2). In the illustrated example, deck plate actuator 255 is a hydraulic valve (though in other examples could be other types of valves) that provides fluid to an actuator (not shown in FIG. 3) which thereby actuates to cause movement of linkage 220. Linkage 220 spans a width of header 104 (e.g., spans at least the width of the row units 1214). For each row unit, a sub-linkage 222 is coupled, at one end, to the linkage 220 and at another end to a deck plate. Movement of the linkage 220 causes movement of the sub-linkages 222 and corresponding movement of the deck plates. In the illustrated example, for each set of deck plates, one deck plate is fixed and while the other deck plate, coupled to the sub-linkage 222, is movable to change its position and thus spacing between the deck plates. While examples described herein show a deck plate actuator assembly in the form of a fluid actuator assembly (e.g., hydraulic actuator assembly, pneumatic actuator assembly, etc.), in other examples, other forms of actuator assemblies are contemplated, such as an electric actuator assembly.

In generating the control signal to control the deck plate subsystem, controller 235 can also account for a current position of the deck plates, as detected by deck plate position sensor 280. Deck plate position sensor 280 illustratively detects a position (or spacing) of the deck plates and provides a sensor signal indicative of the detected position (or spacing) to the controller 235. After the position is adjusted, deck plate position sensor 280 can detect the adjusted position of the deck plates for compliance with the position commanded by the controller 235. In the illustrated example, deck plate position sensor 280 is a rotary encoder that detects rotation of linkage 220.

While FIG. 3 illustrates that header 104 includes only a single stalk diameter sensor 282, in other examples, header 104 may include two or more stalk diameter sensors 282 each corresponding to a different row unit. Further, header 104 can include two or more deck plate position sensors 280, each corresponding to a different row unit (i.e., a different set of deck plates). Additionally, while only one deck plate controller 235 is shown, header 104 can include a plurality of deck plate controllers 235, such as a deck plate controller 235 for each set of a deck plates, or a plurality of deck plate controllers 235, each deck plate controller 235 of the plurality of deck plate controllers 235 responsible for a respective plurality of individual sets of deck plates. Various arrangements of the header 104 and deck plate control are contemplated herein, including simultaneous positioning of all deck plates (as illustrated), separate positioning for subsets of the sets of deck plates (e.g., sectional control, wherein each section includes a corresponding plurality of sets of deck plates), as well as separate and individual control of the position each set of deck plates. Depending on the control arrangement, the number of sensors 280, actuators 255, and controllers 235 may vary.

FIG. 4 is a block diagram showing some portions of an agricultural harvesting system architecture 300. FIG. 4 shows that agricultural system architecture 300 includes mobile agricultural harvesting machine 100 (also referred to herein as harvester 100 or mobile machine 100), one or more remote computing systems 368, one or more remote user interfaces 364, network 359, one or more predictive stalk diameter map(s), and one or more information maps 358. Mobile machine 100, itself, illustratively includes one or more processors or servers 301, data store 302, communication system 306, one or more in-situ sensors 308 that sense one or more characteristics at a worksite concurrent with an operation, and a processing system 338 that processes the sensors signals generated by in-situ sensors 308 to generate processed sensor data. The in-situ sensors 308 generate values corresponding to the sensed characteristics. Mobile machine 100 also includes a predictive model or relationship generator (collectively referred to hereinafter as "predictive model generator 310"), predictive model or relationship (collectively referred to hereinafter as "predictive model 311"), predictive map generator 312, control zone generator 313, control system 314, one or more controllable subsystems 316, and operator interface mechanisms 318. The mobile machine 100 can also include a wide variety of other machine functionality 320.

As illustrated, data store 302 can include confidence criteria data 367 as well as various other data 371, some of which will be described below.

The in-situ sensors 308 can be on-board mobile machine 100, remote from mobile machine, such as deployed at fixed locations on the worksite or on another machine operating in concert with mobile machine 100, such as an aerial vehicle, and other types of sensors, or a combination thereof. In-situ sensors 308 sense characteristics at a worksite during the course of an operation. In-situ sensors 308 illustratively one or more deck plate position sensors 380, one or more stalk diameter sensors 382, one or more command input sensors 384, one or more heading/speed sensors 325, one or more geographic position sensors 304, and can include various other sensors 328.

Deck plate position sensors 380 sense the position (or spacing) of one or more sets of deck plates 1226 of header 104 and generate sensor data (e.g., sensor signals, etc.) indicative of the detected position (or spacing) of the one or more sets of deck plates 1226. Deck plate position sensors 380 can be similar to deck plate position sensor 280 shown in FIG. 3 or can comprise various other types of deck plate position sensors.

Stalk diameter sensors 382 sense the diameter of crop plants received by one or more row units 1214 of header 104 and generate sensor data (e.g., sensor signals, etc.) indicative of the detected stalk diameters of the crop plants received by one or more row units 1214. Stalk diameter sensors 382 can be similar to stalk diameter sensor 282 shown in FIG. 3 or can comprise various other types of stalk diameter sensors.

Command input sensors 384 sense (or detect) a command input value provided by an operator or user that sets a position (or spacing) of the deck plates 1226. For example, command input sensors 384 may sense (or detect) operator or user interaction with an interface mechanism used to adjust or establish the position (or spacing) of the deck plates 1226. This command input value (e.g., a deck plate position (or spacing) value) can be used to indicate (or derive) a stalk diameter value.

Geographic position sensors 304 illustratively sense or detect the geographic position or location of mobile machine 100. Geographic position sensors 304 can include, but are not limited to, a global navigation satellite system (GNSS) receiver that receives signals from a GNSS satellite transmitter. Geographic position sensors 304 can also include a real-time kinematic (RTK) component that is configured to enhance the precision of position data derived from the GNSS signal. Geographic position sensors 304 can include a dead reckoning system, a cellular triangulation system, or any of a variety of other geographic position sensors. In some examples, the geographic position or location detected by geographic position sensors 304 can be processed to derive a geographic position or location of a given component of mobile machine 100. The dimensions of the mobile machine, such as the distance of certain components from the geographic position sensors 304, which can be stored in data store 302 or otherwise provided, can be used, in combination with detected geographic position or location, to derive the geographic position or location of the component. This processing can be implemented by processing system 338.

Heading/speed sensors 325 detect a heading and speed at which mobile machine 100 is traversing the worksite during the operation. This can include sensors that sense the movement of ground engaging traction elements (e.g., 108 or 110, or both) or can utilize signals received from other sources, such as geographic position sensor 304. Thus, while heading/speed sensors 325 as described herein are shown as separate from geographic position sensor 304, in some examples, machine heading/speed is derived from signals received from geographic positions sensors 304 and subsequent processing. In other examples, heading/speed sensors 325 are separate sensors and do not utilize signals received from other sources.

Other in-situ sensors 328 may be any of a variety of other types of sensors. Other in-situ sensors 328 can be on-board mobile machine 100 or can be remote from mobile machine 100, such as other in-situ sensors 328 on-board another mobile machine that capture in-situ data of the worksite or sensors at fixed locations throughout the worksite. The remote data from remote sensors can be obtained by mobile machine 100 via communication system 306 over network 359.

In-situ data includes data taken from a sensor on-board the mobile machine 100 or taken by any sensor where the data are detected during the operation of mobile machine 100 at a field.

Processing system 338 processes the sensor data (e.g., sensor signals, etc.) generated by in-situ sensors 308 to generate processed sensor data indicative of the sensed variables. For example, processing system generates processed sensor data indicative of sensed variable values based on the sensor data generated by in-situ sensors 308, such as deck plate position (or spacing) values based on sensor data generated by deck plate position sensors 380, stalk diameter values based on sensor data generated by stalk diameter sensors 382, stalk diameter values based on sensor data generated by command input sensors 384, geographic location values based on sensor signals generated by geographic position sensors 304, machine speed (travel speed, acceleration, deceleration, etc.) values or heading values, or both, based on sensor signals generated by heading/speed sensors 325, as well as various other values based on sensors signals generated by various other in-situ sensors 328.

It will be understood that processing system 338 can be implemented by one or more processers or servers, such as processors or servers 301. Additionally, processing system 338 can utilize various sensor signal filtering techniques, noise filtering techniques, sensor signal categorization, aggregation, normalization, analog-to-digital conversion, as well as various other processing functionalities. Similarly, processing system 338 can utilize various image processing techniques such as, sequential image comparison, RGB color extraction, edge detection, black/white analysis, machine learning, neural networks, pixel testing, pixel clustering, shape detection, as well any number of other suitable image processing and data extraction functionalities.

FIG. 4 shows that an operator 360 may operate mobile machine 100. The operator 360 interacts with operator interface mechanisms 318. The operator 360 may be local to mobile machine 100 or may be remote from mobile machine 100. In some examples, operator interface mechanisms 318 may include joysticks, levers, a steering wheel, linkages, pedals, buttons, key fobs, wireless devices, such as mobile computing devices, dials, keypads, a display device with actuatable display elements (such as icons, buttons, etc.), a microphone and speaker (where speech recognition and speech synthesis are provided), among a wide variety of other types of control devices. Where a touch sensitive display system is provided, operator 360 may interact with operator interface mechanisms 318 using touch gestures. These examples described above are provided as illustrative examples and are not intended to limit the scope of the present disclosure. Consequently, other types of operator interface mechanisms 318 may be used and are within the scope of the present disclosure.

FIG. 4 also shows one or more remote users 366 interacting with mobile machine 100 or remote computing systems 368, or both, through user interface mechanisms 364 over network 359. User interface mechanisms 364 can include joysticks, levers, a steering wheel, linkages, pedals, buttons, key fobs, wireless devices, such as mobile computing devices, dials, keypads, a display device with actuatable display elements (such as icons, buttons, etc.), a microphone and speaker (where speech recognition and speech synthesis are provided), among a wide variety of other types of control devices. Where a touch sensitive display system is provided, a remote user 364 may interact with user interface mechanisms 364 using touch gestures. These examples described above are provided as illustrative examples and are not intended to limit the scope of the present disclosure. Consequently, other types of user interface mechanisms 364 may be used and are within the scope of the present disclosure.

Remote computing systems 368 can be a wide variety of different types of systems, or combinations thereof. For example, remote computing systems 368 can be in a remote server environment. Further, remote computing systems 368 can be remote computing systems, such as mobile devices, a remote network, a farm manager system, a vendor system, or a wide variety of other remote systems. In one example, mobile machine 100 can be controlled remotely by remote computing systems 368 or by remote users 366, or both. As will be described below, in some examples, one or more of the components shown being disposed on mobile machine 100 in FIG. 4 can be located elsewhere, such as at remote computing systems 368 and/or user interface mechanisms 364.

FIG. 4 illustrates that mobile machine 100 can obtain one or more predictive stalk diameter maps 257. The predictive stalk diameter maps 257 map predictive stalk diameter values across different geographic locations in the worksite. The predictive stalk diameter maps 257 can be generated in a variety of ways. For example, they may be based on crop modeling, stalk diameter data provided by the seed producer, historical stalk diameter data, or derived in various other ways. Alternatively, or additionally, and as will be described in more detail below, agricultural harvesting system 300 can generate functional predictive maps 263 which may include functional predictive stalk diameter maps.

FIG. 4 also shows that mobile machine 100 can obtain one or more information maps 358. As described herein, the information maps 358 include, for example, one or more of a crop genotype map, crop population map, a vegetative index map, a topographic map, and a soil type map. However, information maps 358 may also encompass other types of data, such as other types of data that were obtained prior to the current operation or a map from a prior operation. In other examples, information maps 358 can be generated during a current operation, such a map generated by predictive map generator 312 based on a predictive model 311 generated by predictive model generator 310 or a harvest coverage map generated during the current operation that indicates areas of the field that have been harvested and areas of the field that have not yet been harvested.

Stalk diameter maps 357 and information maps 358 may be downloaded onto mobile machine 100 over network 359 and stored in data store 302, using communication system 306 or in other ways. In some examples, communication system 306 may be a cellular communication system, a system for communicating over a wide area network or a local area network, a system for communicating over a near field communication network, or a communication system configured to communicate over any of a variety of other networks or combinations of networks. Network 359 illustratively represents any or a combination of any of the variety of networks. Communication system 306 may also include a system that facilitates downloads or transfers of information to and from a secure digital (SD) card or a universal serial bus (USB) card or both.

Predictive model generator 310 generates a model that is indicative of a relationship between the values sensed by the in-situ sensors 308 and one or more values mapped to the field by the information maps 358. For example, if the one or more information maps 358 map one or more of crop genotype values, crop population values, vegetative index values, topographic characteristic values, and soil type values to different locations in the worksite, and the in-situ sensor 308 is sensing values indicative of stalk diameter, then model generator 310 generates a predictive stalk diameter model that models the relationship between the mapped values (one or more of the crop genotype values, crop population values, vegetative index values, topographic characteristic values, and soil type values) and the stalk diameter values.

In some examples, the predictive map generator 312 uses the predictive models generated by predictive model generator 310 to generate one or more functional predictive maps 263 that predict the value of a characteristic, such as stalk diameter values, sensed by the in-situ sensors 308 at different locations in the worksite based upon one or more of the information maps 358. For example, where the predictive model is a predictive stalk diameter model that models a relationship between stalk diameter sensed by stalk diameter sensors 382 and one or more of crop genotype values, crop population values, vegetative index values, topographic characteristic values, and soil type values then predictive map generator 312 generates a functional predictive stalk diameter map that predicts stalk diameter values at different locations at the field based on one or more of the crop genotype values, crop population values, vegetative index values, topographic characteristic values, and soil type values at those locations and the predictive stalk diameter model.

In some examples, the type of values in the functional predictive map 263 may be the same as the in-situ data type sensed by the in-situ sensors 308. In some instances, the type of values in the functional predictive map 263 may have different units from the data sensed by the in-situ sensors 308. In some examples, the type of values in the functional predictive map 263 may be different from the data type sensed by the in-situ sensors 308 but have a relationship to the type of data type sensed by the in-situ sensors 308. For example, in some examples, the data type sensed by the in-situ sensors 308 may be indicative of the type of values in the functional predictive map 263. In some examples, the type of data in the functional predictive map 263 may be different than the data type in the information maps 358. In some instances, the type of data in the functional predictive map 263 may have different units from the data in the information maps 358. In some examples, the type of data in the functional predictive map 263 may be different from the data type in the information map 358 but has a relationship to the data type in the information map 358. For example, in some examples, the data type in the information maps 358 may be indicative of the type of data in the functional predictive map 263. In some examples, the type of data in the functional predictive map 263 is different than one of, or both of, the in-situ data type sensed by the in-situ sensors 308 and the data type in the information maps 358. In some examples, the type of data in the functional predictive map 263 is the same as one of, or both of, of the in-situ data type sensed by the in-situ sensors 308 and the data type in information maps 358. In some examples, the type of data in the functional predictive map 263 is the same as one of the in-situ data type sensed by the in-situ sensors 308 or the data type in the information maps 358, and different than the other.

As an example, the information map 358 can be a crop genotype map and the in-situ sensor 308 is a stalk diameter sensor that senses a value indicative of a stalk diameter, predictive map generator 312 can use the crop genotype values in information map 358, and the predictive model generated by predictive model generator 310, to generate a functional predictive map 263 that predicts the stalk diameter at different locations in the field based on the crop genotype values in the crop genotype map at those different locations and based on the predictive model. Predictive map generator 312 thus outputs predictive map 264.

As shown in FIG. 4, predictive map 264 predicts the value of a sensed characteristic (sensed by in-situ sensors 308), or a characteristic related to the sensed characteristic, at various locations across the worksite based upon one or more information values in one or more information maps 358 at those locations and using the predictive model. For example, if predictive model generator 310 has generated a predictive model indicative of a relationship between crop genotype values and stalk diameter values, then, given the crop genotype value at different locations across the worksite, predictive map generator 312 generates a predictive map 264 that predicts stalk diameter values at those different locations across the worksite. The crop genotype value, obtained from the crop genotype map, at those locations and the relationship between crop genotype values and stalk diameter values, obtained from the predictive model, are used to generate the predictive map 264. This is merely one example.

Some variations in the data types that are mapped in the information maps 358, the data types sensed by in-situ sensors 308, and the data types predicted on the predictive map 264 will now be described.

In some examples, the data type in one or more information maps 358 is different from the data type sensed by in-situ sensors 308, yet the data type in the predictive map 264 is the same as the data type sensed by the in-situ sensors 308. For instance, the information map 358 may be a vegetative index map, and the variable sensed by the in-situ sensors 308 may be stalk diameter. The predictive map 264 may then be a predictive stalk diameter map that maps predicted stalk diameter values to different geographic locations in the in the field.

Also, in other examples, the data type in the information map 358 is different from the data type sensed by in-situ sensors 308, and the data type in the predictive map 264 is different from both the data type in the information map 358 and the data type sensed by the in-situ sensors 308. For instance, the information map 358 may be a crop population map, and the variable sensed by the in-situ sensors 308 may be stalk diameter. The predictive map 264 may then be a predictive deck plate position (or spacing) map that maps predicted deck plate position (or spacing) values to different geographic locations in the field.

In other examples, the information map 358 is from a prior pass through the field during a prior operation and the data type is different from the data type sensed by in-situ sensors 308, yet the data type in the predictive map 264 is the same as the data type sensed by the in-situ sensors 308. For instance, the information map 358 may be a crop population map generated during a previous planting operation on the worksite, and the variable sensed by the in-situ sensors 308 may be stalk diameter. The predictive map 264 may then be a predictive stalk diameter map that maps predicted stalk diameter values to different geographic locations in the field.

In some examples, the information map 358 is from a prior pass through the field during a prior operation and the data type is the same as the data type sensed by in-situ sensors 308, and the data type in the predictive map 264 is also the same as the data type sensed by the in-situ sensors 308. For instance, the information map 358 may be a prior operation map generated during a previous year (previous harvest) that maps stalk diameter in the operation during the previous year, and the variable sensed by the in-situ sensors 308 may be stalk diameter. The predictive map 264 may then be a predictive stalk diameter map that maps predicted stalk diameter values to different geographic locations in the field. In such an example, the relative stalk diameter differences in the georeferenced information map 358 from the prior year can be used by predictive model generator 310 to generate a predictive model that models a relationship between the relative stalk diameter differences on the information map 358 and the stalk diameter values sensed by in-situ sensors 308 during the current operation. The predictive model is then used by predictive map generator 310 to generate a predictive stalk diameter map.

In another example, the information map 358 may be a map generated during a prior operation in the same year and the variable sensed by the in-situ sensors 308 during the current operation may be stalk diameter. The predictive map 264 may then be a predictive stalk diameter map that maps predicted stalk diameter values to different geographic locations in the worksite. In such an example, values at time of the prior operation in the same year are geo-referenced recorded and provided to mobile machine 100 as an information map 358. In-situ sensors 308 during a current operation can detect stalk diameter at geographic locations in the field and predictive model generator 310 may then build a predictive model that models a relationship between stalk diameter at time of the current operation and values at the time of the prior operation in the same year. This is merely an example.

In some examples, predictive map 264 can be provided to the control zone generator 313. Control zone generator 313 groups adjacent portions of an area into one or more control zones based on data values of predictive map 264 that are associated with those adjacent portions. A control zone may include two or more contiguous portions of a worksite, such as a field, for which a control parameter corresponding to the control zone for controlling a controllable subsystem is constant. For example, a response time to alter a setting of controllable subsystems 316 may be inadequate to satisfactorily respond to changes in values contained in a map, such as predictive map 264. In that case, control zone generator 313 parses the map and identifies control zones that are of a defined size to accommodate the response time of the controllable subsystems 316. In another example, control zones may be sized to reduce wear from excessive actuator movement resulting from continuous adjustment. In some examples, there may be a different set of control zones for each controllable subsystem 316 or for groups of controllable subsystems 316. The control zones may be added to the predictive map 264 to obtain predictive control zone map 265. Predictive control zone map 265 can thus be similar to predictive map 264 except that predictive control zone map 265 includes control zone information defining the control zones. Thus, a functional predictive map 263, as described herein, may or may not include control zones. Both predictive map 264 and predictive control zone map 265 are functional predictive maps 263. In one example, a functional predictive map 263 does not include control zones, such as predictive map 264. In another example, a functional predictive map 263 does include control zones, such as predictive control zone map 265. In some examples, multiple crop genotypes (e.g., species, hybrids, cultivars, etc.) may be simultaneously present in the field. In that case, predictive map generator 312 and control zone generator 313 are able to identify the location and characteristics of the two or more crop genotypes and then generate predictive map 264 and predictive map with control zones 265 accordingly.

It will also be appreciated that control zone generator 313 can cluster values of the predictive map 264 to generate control zones and the control zones can be added to predictive control zone map 265, or a separate map, showing only the control zones that are generated. For example, control zone generator 313 may generate control zones by clustering data values of the predictive map 264 that are within the same range. In some examples, the control zones may be used for controlling or calibrating mobile machine 100 or both. In other examples, the control zones may be presented to the operator 360 or a user 366, or both, and used to control or calibrate mobile machine 100, and, in other examples, the control zones may be presented to the operator 360 or another user, such as a remote user 366, or stored for later use.

FIG. 4 also shows that mobile machine 100 includes a control system 314 and one or more controllable subsystems 316. Control system 314 includes communication system controller 329, interface controller 330, propulsion controller 331, path planning controller 333, one or more deck plate controllers 335, zone controller 336, confidence system 340, and can include other items 337. Controllable subsystems 316 include propulsion subsystem 350, steering subsystem 352, deck plate subsystem 354, and can include other items 356.

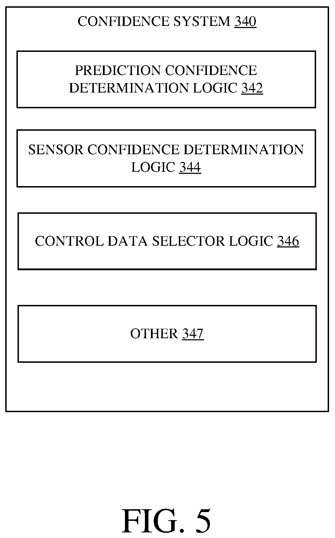

In some examples, stalk diameter sensor data generated by stalk diameter sensor(s) 382 are provided to control system 314, which generates control signals based upon the stalk diameter sensor data. In some examples, a predictive stalk diameter map 357 is provided to control system 314, which generates control signals based upon the predictive stalk diameter map 357. In some examples, predictive map 264 or predictive control zone map 265, or both, are provided to control system 314, which generates control signals based upon the predictive map 264 or predictive control zone map 265 or both. In some examples, the type of data used by control system 314 to control controllable subsystems 316 depends on a confidence value of the data. As illustrated in FIG. 4, mobile machine 100 includes confidence system 340 which can, among other things, determine confidence values of the various data that may be used for control. Confidence system 340 will be described in more detail in FIG. 5.

In some examples, communication system controller 329 controls communication system 306 to communicate sensor data (generated by in-situ sensors 308), the predictive stalk diameter map(s) 257, predictive map 264 or predictive control zone map 265, or control signals based on the stalk diameter sensor data, the predictive stalk diameter map(s) 257, or the predictive map 264 or predictive control zone map 265, or a combination thereof, to other mobile machines that are operating at the same worksite or in the same operation. In some examples, communication system controller 329 controls the communication system 306 to send the sensor data, the predictive stalk diameter map(s) 257, predictive map 264, predictive control zone map 265, or a combination thereof, to other remote systems, such as remote computing systems 368.

Interface controller 330 is operable to generate control signals to control interface mechanisms, such as operator interface mechanisms 318 or user interface mechanisms 364, or both.

The interface controller 330 is also operatable to present the sensor data (generated by in-situ sensors 308), or other information derived from or based on the sensor data to operator 360 or a remote user 366, or both. As an example, interface controller 330 generates control signals to control a display mechanism to display the sensor data for the operator 360 or a remote user 366, or both.

The interface controller 330 is also operatable to present the predictive stalk diameter map(s) 357, or other information derived from or based on the predictive stalk diameter map(s) 357 to operator 360 or a remote user 366, or both. As an example, interface controller 330 generates control signals to control a display mechanism to display the one or more of the predictive stalk diameter maps 357 for the operator 360 or a remote user 366, or both.

The interface controller 330 is also operable to present the predictive map 264 or predictive control zone map 265, or both, or other information derived from or based on the predictive map 264, predictive control zone map 265, or both, to operator 360 or a remote user 366, or both. As an example, interface controller 330 generates control signals to control a display mechanism to display one or both of predictive map 264 and predictive control zone map 265 for the operator 360 or a remote user 366, or both. Interface controller 330 may generate operator or user actuatable mechanisms that are displayed and can be actuated by the operator or user to interact with the displayed map. The operator or user can edit the map by, for example, correcting a value displayed on the map, based on the operator's or the user's observation or desire.

Propulsion controller 331 illustratively generates control signals to control propulsion subsystem 350 to control a speed setting, such as one or more of travel speed, acceleration, deceleration, and propulsion direction (e.g., forward and reverse), based on one or more of the sensor data (generated by sensors 308), predictive stalk diameter map(s) 357, predictive map 264, and the predictive control zone map 265. The propulsion subsystem 350 includes various powertrain elements, such as a motor or engine, a gear box (e.g., transmission), as well as various actuators.

Path planning controller 333 illustratively generates control signals to control steering subsystem 352 to steer mobile machine 100 according to a desired path or according to desired parameters, such as desired steering angles based on one or more of the sensor data (generated by sensors 308), predictive stalk diameters maps 357, predictive map 264, and the predictive control zone map 265. Path planning controller 333 can control a path planning system to generate a route for mobile machine 100 and can control propulsion subsystem 350 and steering subsystem 352 to steer agricultural mobile machine 100 along that route. Steering subsystem 352 includes one or more actuators to control the steering angle of one or more ground engaging traction elements of mobile machine 100.

Zone controller 336 illustratively generates control signals to control one or more controllable subsystems 316 to control operation of the one or more controllable subsystems based on the predictive control zone map 265.

Deck plate controller(s) 335 illustratively generate control signals to control deck plate subsystem 354 to control the position (or spacing) of one or more deck plates of the mobile agricultural harvesting machine 100 based on one or more of the sensor data generated by sensors 308 (e.g., stalk diameter sensor data generated by stalk diameter sensors 382), a predictive stalk diameter map 357, predictive map 264 (e.g., a functional predictive stalk diameter map), and predictive control zone map 265 (e.g., a functional predictive stalk diameter control zone map).

Deck plate controller(s) 335 can be similar to deck plate controller 235 shown in FIG. 3. In some examples, there may be more than one deck plate controller 335 that controls the position (or spacing) of a respective set of deck plates (e.g., a single pair of deck plates) or of a respective plurality of deck plates (e.g., a section comprising a plurality of pairs of deck plates). In some examples, there may be a single deck plate controller 335 that controls the position (or spacing) of a plurality of deck plates either individually, all together, or all together in subsets (e.g., there may be multiple sections each having a plurality of sets of deck plates, the deck plates of each section controlled together but separate from the other sections). Additionally, while deck plate controller(s) 335 are referred to specifically, for purposes of illustration, it will be understood that a controller that controls the position (or spacing) of one or more pairs of deck plates may also provide control for other machine functionality, such as other header functionality. Deck plate subsystem 354 can be similar to the deck plate subsystem shown in FIG. 3. For example, deck plate subsystem 354 can include one or more deck plate actuators (e.g., similar to deck plate actuator assembly 251, which includes valve 255 and a fluid actuator, such as a fluid cylinder), one or more linkages (e.g., similar to linkage 220), and one or more sub-linkages (e.g., similar to sub-linkages 222). The deck plate subsystem 354 can take various other forms.

Deck plate controller(s) 335 determine a target (e.g., desirable, optimal, etc.) position (or spacing) of deck plates based on the sensor data (stalk diameter sensor data) or predictive data (from a predictive stalk diameter map). For example, a deck plate controller 335 may determine a target position (or spacing) of deck plates based on a stalk diameter sensed by stalk diameter sensors 382. In other examples, a deck plate controller 335 may determine a target position (or spacing) of deck plates based on predictive stalk diameter values provided by a predictive stalk diameter map. The predictive stalk diameter values across a width of the header 104 may vary. In some examples, such as where more than one set of deck plates are being controlled by a deck plate controller 335, deck plate controller 335 may have to determine a target deck plate position (or spacing) that is desirable given the varied stalk diameter values across the width of the header 104 (or across the width of the header the includes the deck plate pairs that are being controlled by the particular deck plate controller 335). For instance, deck plate controller 335 may determine a target deck plate position (or spacing) that accommodates the largest diameter across the width. In another example, deck plate controller 335 may determine a target deck plate position (or spacing) that accommodates the greatest amount of plants across its width. In another example, deck plate controller 335 may determine a target deck plate position (or spacing) based on a sensed or predicted stalk diameter and a predetermined offset. Deck plate controllers 335 then generate control signals to control deck plate subsystem 354 to control the position (or spacing) of one or more deck plates of the mobile agricultural harvesting machine 100 based on the determined target deck plate position (or spacing).

Other items 337 can include other controllers included on the mobile machine 100, or at other locations in agricultural system 300, that can control other subsystems based on one or more of the sensor data generated by sensors 308, a predictive stalk diameter map 357, predictive map 264, and the predictive control zone map 265.

While the illustrated example of FIG. 4 shows that various components of agricultural system architecture 300 are located on mobile machine 100, it will be understood that in other examples one or more of the components illustrated on mobile machine 100 in FIG. 4 can be located at other locations, such as one or more remote computing systems 368. For instance, one or more of data stores 302, map selector 309, predictive model generator 310, predictive model 311, predictive map generator 312, confidence system 340, functional predictive maps 263 (e.g., 264 and 265), and control zone generator 313, can be located remotely from mobile machine 100 but can communicate with mobile machine 100 via communication system 306 and network 359. Thus, the predictive models 311 and functional predictive maps 263 may be generated at remote locations away from mobile machine 100 and can be communicated to mobile machine 100 over network 359. For example, communication system 306 can download the predictive models 311 and functional predictive maps 263 from the remote locations and store them in data store 302. In other examples, mobile machine 100 may access the predictive models 311 and functional predictive maps 263 at the remote locations without downloading the predictive models 311 and functional predictive maps 263. The information used in the generation of the predictive models 311 and functional predictive maps 263 may be provided to the predictive model generator 310 and the predictive map generator 312 at those remote locations over network 359, for example in-situ sensor data generator by in-situ sensors 308 can be provided over network 359 to the remote locations. Similarly, information maps 358 can be provided to the remote locations. These are merely examples.

In some examples, control system 314 can be located remotely from mobile machine 100 such as at one or more of remote computing systems 368 and remote user interface mechanisms 364. In other examples, a remote location, such as remote computing systems 368 or user interface mechanisms 364, or both, may include a respective control system which generates control values that can be communicated to mobile machine 100 and used by on-board control system 314 to control the operation of mobile machine 100. These are merely examples.

FIG. 5 is a block diagram of a portion of the agricultural harvesting system architecture 300 shown in FIG. 4. Particularly, FIG. 5 shows, among other things, examples of the confidence system 340 in more detail. As illustrated in FIG. 5, confidence system 340 includes prediction confidence determination logic 342, sensor confidence determination logic 344, control data selector logic 346, and can include other items 347.

As described above, confidence system 340 determines a confidence level in the various data that may be used by control system 314 in controlling mobile agricultural harvesting machine 100, and based on the determined confidence level(s) may select which data is to be used by control system 314 for control.

Prediction confidence determination logic 342 illustratively determine a confidence level in the predictive stalk diameter data (predictive stalk diameter maps) based on confidence criteria (which may be stored as confidence criteria data 367 in data store 302). This confidence level can be referred to as a predictive data (or predictive stalk diameter data) confidence level. The predictive stalk diameter maps may be predictive stalk diameter maps 357 or a functional predictive stalk diameter map 263 (with or without control zones). The confidence criteria for the predictive stalk diameter data (predictive data (or predictive stalk diameter data) confidence criteria) can include, for example, a number of stalk diameter sensor data samples that have been collected during the current operation. For example, it may be that the larger the amount of stalk diameter sensor readings that are collected the higher the confidence level for the functional predictive stalk diameter map 263 will be. There may be a threshold number of stalk diameter sensor readings such that the functional predictive stalk diameter map 263 cannot be used or will be given a zero confidence level at least until the threshold number of stalk diameter sensor readings have been taken. The predictive confidence criteria can include, for example, the freshness (closeness in time to the time of the current operation) of the data upon which the maps are based. For example, the freshness of the information maps 358 upon which the functional predictive stalk diameter maps 263 are based. In another example, the time at which the predictive stalk diameter map 357 was generated or the time at which the data for the predictive stalk diameter map 357 was collected. The predictive data confidence criteria can include, for example, the type and number of types of data that forms the basis (basis data) for the predictive map. For example, a map generated based on a combination of different types of basis data may have a higher confidence level than a map generated based on a single basis data type or lesser combination of basis data types. In another example, a map based on one type of basis data (e.g., crop genotype data) may have a higher confidence than a map based on another type of basis data (e.g., soil type data). In another example, the predictive data confidence criteria can include a comparison to historical stalk diameter data (e.g., historical stalk diameter data for the same field and/or for the same crop genotype). For example, where the predictive stalk diameter values for the current operation vary from the historical stalk diameter values, the confidence level may be affected. The extent of the effect may be based further on a threshold, such that where the variance exceeds a threshold variance, the confidence level is further affected. In another example, predictive stalk diameter values can be compared to detected stalk diameter values (detected by stalk diameter sensors 382) and the difference between the two (error of the predictive value) may affect the confidence level. The extent of the effect may be based further on a threshold, such that where the variance (error) exceeds a threshold variance (threshold error), the confidence level is further affected. These are merely some examples of the predictive data confidence criteria. In other examples, predictive data confidence criteria can include, alternatively or additionally, other types of criteria.

Sensor confidence determination logic 344 illustratively determines a confidence level in the stalk diameter sensor data generated by stalk diameter sensors 382 based on confidence criteria (which may be stored as confidence criteria data 367 in data store 302). This confidence level may be referred to as a sensor data (or stalk diameter sensor data) confidence level. The confidence criteria for the stalk diameter sensor data (sensor data (or stalk diameter sensor data) confidence criteria) can include, for example, the harvest state of crop in the path of the stalk diameter sensor 382. For example, where the crop in the path of the stalk diameter sensor 382 has already been harvested, the stalk diameter sensor may be given a zero confidence level as it will not be reading stalk diameters. The harvest state can be derived from a harvest coverage map (as an information map 358) as well as the geographic location of the mobile machine 100. In other examples, the mobile machine 100 may be outfitted with a sensor (e.g., a forward-looking camera) that detects the harvest state of crop ahead of the mobile machine 100. The sensor data confidence criteria can include variance of stalk diameter across a width of the header 104. For example, where there is a relatively (e.g., relative to a threshold level) large amount of variance of stalk diameter (e.g., predicted, sensed, or otherwise indicated) across a width of the header, the confidence in the sensor data may be lessened. For example, where the variance is derived from a predictive source, and there is a relatively (e.g., relative to a threshold level) large amount of variance predicted, the confidence in the sensor data may be lessened, particularly where there is not a sensor for each row unit. In another example, the variance may be detected by the stalk diameter sensors 382, and where the stalk diameter sensors 382 detect a relatively (e.g., relative to a threshold level) large amount of variance, the confidence level in the sensor data may be lessened. For instance, it may be that the machine includes a first stalk diameter sensor 382 and a second stalk diameter sensor 382 a certain amount of rows (e.g. six rows) away from the first stalk diameter sensor. The first stalk diameter sensor 382 may detect a first stalk diameter (e.g., 12 mm) while the second stalk diameter sensor 382 detects a second stalk diameter (e.g., 22 mm). The variance (difference) between the detected first stalk diameter and the detected second stalk diameter may be large (e.g., relative to a threshold) such that the confidence in the stalk diameter sensor data is lessened. Conversely, the variance (difference) between the detected first stalk diameter and the detected second stalk diameter may be small (e.g., relative to a threshold) such that the confidence in the stalk diameter sensor data is high, or at least, is not lessened. As discussed above, the variance can be derived from various data sources, such as mapped values of stalk diameter at the field, crop genotype data, predictive stalk diameter data based on a stalk diameter model, historical stalk diameter values, sensed stalk diameter values (e.g., sensed by stalk diameter sensors 382), as well as various other sources of data. The sensor data confidence criteria can include the proximity of the sensor 382 to a boundary of the field. For example, where the sensor 382 is travelling along the boundary, a zero confidence level may be given as it will not be harvesting crop. In another example, where the sensor is travelling close to the boundary, the sensor data may be given a lesser confidence level (as compared to travelling farther away from the boundary) because crop at the boundary may not be representative of the rest of the crop at the field. For instance, crop at the boundary may be exposed to harsher growing conditions (e.g., more wind) and thus may have less growth as compared to non-boundary crops. The boundary data can be derived from a field map that indicates the location of field boundaries (as an information map 358) as well as the geographic location of the mobile machine 100. The sensor data confidence criteria can include the weediness of the worksite in the path of the stalk diameter sensor 382. For example, the presence of weeds may confound the sensor readings (e.g., read the stalk diameters as larger than they are), and thus the stalk diameter sensor data may be given a lesser confidence level (as compared to when travelling in a less weedy area or an area with no weeds). The weed data can be derived from a map (e.g., an information map 358) that indicates characteristics of weeds, such as the presence and density of weeds. In other examples, the mobile machine 100 may be outfitted with a sensor (e.g., other sensor 328), such as a forward-looking camera, that detects characteristics of the weeds (e.g., the presence and density of weeds) in the travel path of the stalk diameter sensor 382. The sensor data confidence criteria can include sensor error states, which may be indicated by the sensor detecting stalk diameters above a given threshold (e.g., greater than 45 millimeters (mm)) or detecting stalk diameters below a given threshold (e.g., less than 10 mm), a sensor (or a sensor component, such as a deflectable finger 240 or 241) being stuck in a position (as indicated by a continuous sensor signal indicating the same stalk diameter for a threshold amount of time), or other sensor error states. These are merely some examples of the sensor data confidence criteria. In other examples, sensor data confidence criteria can include, alternatively or additionally, other types of criteria.

Control data selector logic 346 illustratively selects one of the predictive data (e.g., a predictive stalk diameter map) or the sensor data (e.g., stalk diameter sensor data) for use by control system 314 in controlling mobile agricultural harvesting machine 100. In one example, control data selector logic 346 may compare the predictive data confidence level to the sensor data confidence level and, based thereon, select which of the data should be used for control. For example, control data selector logic 346 may select, for control, the data having the higher confidence level. In other examples, there may be a confidence level threshold. Control data selector logic 346 may compare the predictive data confidence level and the sensor data confidence level to the confidence level threshold and, based thereon, select which of the data should be used for control. For example, it may be that only one of the data satisfies the threshold, in which case, that data is selected for control. In another example, it may be that both of the data satisfy the threshold, in which case, the data having the higher confidence level may be chosen, or there may be preferences (e.g., preset or preselected preferences, such as by an operator or user) to use one of the data over the other when both have satisfactory confidence levels. For example, it may be preferrable to use the predictive data over the sensor data because of the benefits of proactive control. In yet another example, it may be that neither of the data satisfy the threshold, in which case, the data having the higher confidence level may be chosen, or there may be preferences (e.g., present or preselected preferences, such as by an operator or user) to use one of the data over the other when neither have satisfactory confidence levels.

Control data selection logic 346 selects which of the data to use for control and based upon the selected data, control system 314 control mobile agricultural harvesting machine 100.

It will be understood that the operation of confidence system 340 can occur continuously throughout the operation, such that the data used for control may be dynamically adjusted. In some examples, confidence system 340 redetermines confidence levels and selections of the data based on various criteria, such as a passage of time, travel of the machine 100 into a new area of the field or into a new pass, based on operator or user input, as well as various other criteria. Thus, it may be that for one moment of time or for one area of the field control system 314 uses one of the sensor data or the predictive data and for another moment of time or for another area of the field control system 314 uses the other of the sensor data or predictive data.

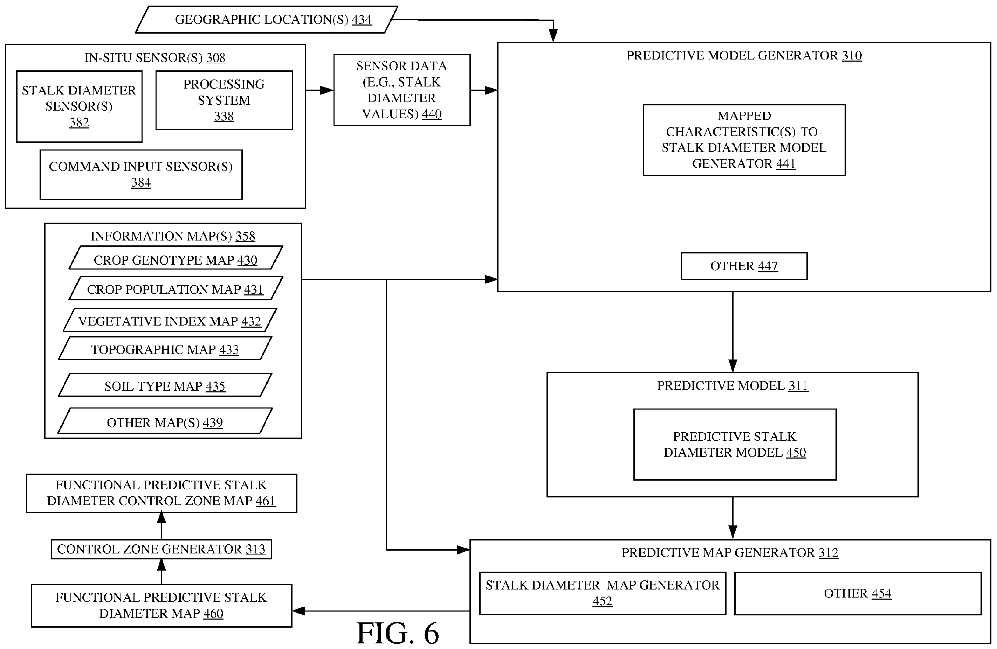

FIG. 6 is a block diagram of a portion of the agricultural harvesting system architecture 300 shown in FIG. 4. Particularly, FIG. 6 shows, among other things, examples of the predictive model generator 310 and the predictive map generator 312 in more detail. FIG. 6 also illustrates information flow among the various components shown. The predictive model generator 310 receives one or more of a crop genotype map 430, a crop population map 431, a vegetative index map 432, a topographic map 433, a soil type map 435, and another type of map 439. Predictive model generator 310 also receives one or more geographic locations 434, or an indication of one or more geographic locations, from a geographic position sensor 304, indicative of one or more geographic locations at the field corresponding to values detected by in-situ sensors 308. In-situ sensors 308 illustratively include stalk diameter sensors 382, command input sensors 384, as well as a processing system 338. In some instances, stalk diameter sensors 382 and command input sensors 384 may be located on-board mobile machine 100. The processing system 338 processes sensor data generated from stalk diameter sensors 382 or from command input sensors 384 to generate processed sensor data 440 indicative of stalk diameter values. While the example shown in FIG. 6 illustrates processing system 338 as a component of in-situ sensors 308, in other examples, such as the example shown in FIG. 4, processing system 338 can be separate from in-situ sensors 308 but in operative communication with in-situ sensors 308.

It will be understood that in some examples, the geographic location detected by geographic position sensor 304 may not directly indicate the geographic location of the component of the machine for which the stalk diameter value, detected by stalk diameter sensors 382 or indicated by the command input sensors 384, was provided. For instance, a stalk diameter sensor 382 may correspond to a given row unit and be located at a given distance away from the geographic position sensor 304. In that case, the geographic location detected and provided by geographic position sensor 304 can be processed to derive a geographic location of the particular stalk diameter sensor, or the corresponding row unit, (such as by obtaining known machine dimensionality from data store 302 as well as machine dynamics, such roll, pitch, and yaw, which can be obtained from various sources, such as an inertial measurement unit on-board mobile machine 100) in order to accurately correlate the mapped value at the location of the stalk diameter sensor 382, or corresponding row unit. Similarly, the command input detected by command input sensor 384, indicative of a stalk diameter, may correspond to a given row unit. Thus, the geographic location 434 provided to predictive model generator 310 may indicate the geographic location of the stalk diameter sensor 382, or a corresponding row unit. In any case, it will be understood that the geographic location 434 indicates the location at the field to which the stalk diameter value corresponds.

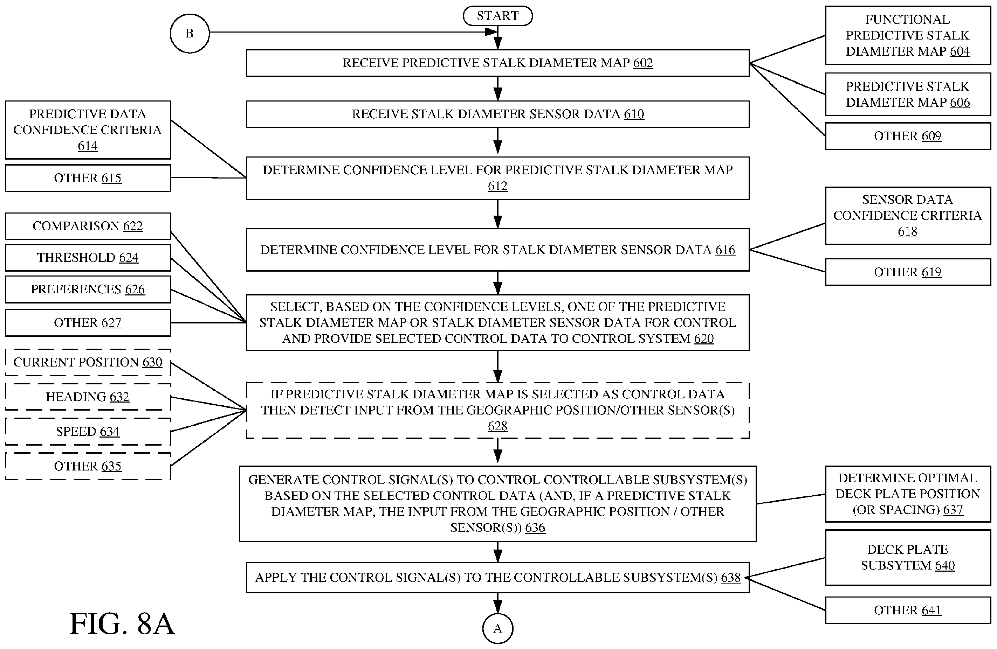

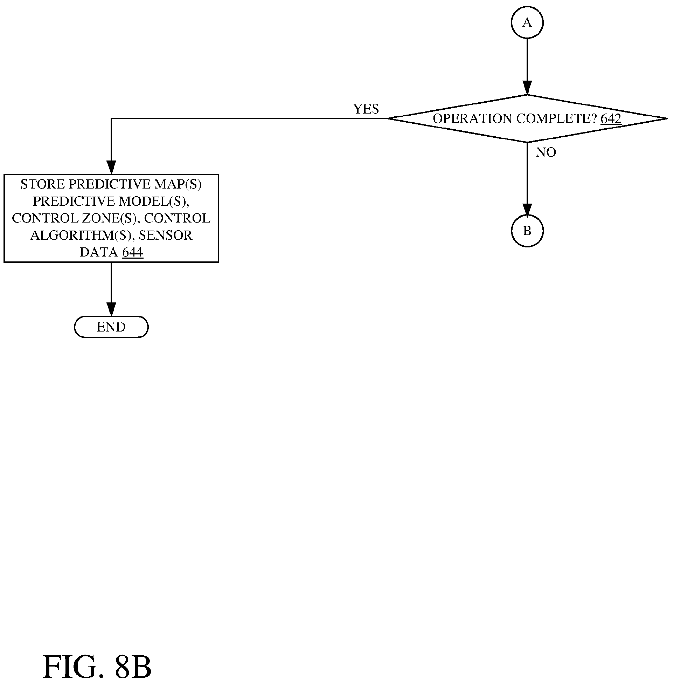

As shown in FIG. 6, the example predictive model generator 310 includes a mapped characteristic(s)-to-stalk diameter model generator 441. In other examples, the predictive model generator 310 may include additional, fewer, or different components than those shown in the example of FIG. 8. Consequently, in some examples, the predictive model generator 310 may include other items 447 as well, which may include other types of predictive model generators to generate other types of stalk diameter models.

Mapped characteristic(s)-to-stalk diameter model generator 441 identifies a relationship between a stalk diameter detected in in-situ sensor data 440, corresponding to a geographic location and one or more mapped characteristic values (one or more of crop genotype values, crop population values, vegetative index (VI) values, topographic characteristic values, soil type values, and other mapped characteristic values) from the one or more information maps 358 corresponding to the same location. Based on this relationship established by mapped characteristic(s)-to-stalk diameter model generator 441, mapped characteristic(s)-to-stalk diameter generator 441 generates a predictive stalk diameter model. The predictive stalk diameter model generated by mapped characteristic(s)-to-stalk diameter model generator 441 is used by stalk diameter map generator 452 to predict stalk diameter (stalk diameter values) at different locations in the worksite based upon the georeferenced values of one or more mapped characteristics contained in the one or more information maps 358 at the same locations in the worksite. Thus, for a given location in the worksite, a stalk diameter value can be predicted at the given location based on the predictive stalk diameter model generated by mapped characteristic(s)-to-stalk diameter model generator 441 and one or more of the crop genotype value from the crop genotype map 430, the crop population value from the crop population map 431, the VI value from the VI map 432, the topographic characteristic value from the topographic map 433, the soil type value from the soil type map 435, and the other characteristic value from the other map 439, at that given location.

In light of the above, the predictive model generator 310 is operable to produce a plurality of different predictive stalk diameter models. In one example, the predictive model may predict stalk diameter based upon one or more of the crop genotype values, the crop population values, the VI values, the topographic characteristic values, the soil type values, and the other characteristic values. In one example, the predictive model may predict stalk diameter based upon two or more of the crop genotype values, the crop population values, the VI values, the topographic characteristic values, the soil type values, and the other characteristic values. Any of these stalk diameter models are represented collectively by predictive stalk diameter model 450 in FIG. 6. Predictive stalk diameter model 450 is an example of a predictive model 311.

The predictive stalk diameter model 450 is provided to predictive map generator 312. In the example of FIG. 6, predictive map generator 312 includes a stalk diameter map generator 452. In other examples, map generator 312 may include additional or different map generators. Thus, in some examples, predictive map generator 312 may include other items 454 which may include other types of map generators to generate other types of maps.

Stalk diameter map generator 452 receives one or more of the crop genotype map 430, the crop population map 431, the VI map 432, the topographic map 433, the soil type map 435, and an other map 439, along with the predictive stalk diameter model 450 which predicts stalk dimeter based upon one or more (or two or more) of a crop genotype value, a crop population value, a VI value, a topographic characteristic value, a soil type value, and an other characteristic value and generates a predictive map that maps predictive stalk diameter values at different locations in the worksite.

Predictive map generator 312 outputs a functional predictive stalk diameter map 460 that is predictive of stalk diameter. The functional predictive stalk diameter map is a predictive map 264. The functional predictive stalk diameter map 460 predicts stalk diameter values at different locations in a worksite. The functional predictive stalk diameter map 460 may be provided to control zone generator 313, control system 314, or both. Control zone generator 313 generates control zones and incorporates those control zones into the functional predictive stalk diameter map 460 to produce a predictive control zone map 265, that is, a functional predictive stalk diameter control zone map 461. One or both of functional predictive stalk diameter map 460 and functional predictive stalk diameter control zone map 461 can be provided to control system 314, which generates control signals to control one or more of the controllable subsystems 316 based upon the functional predictive stalk diameter map 460, the functional predictive stalk diameter control zone map 461, or both. Alternatively, or additionally, one or more of the functional predictive stalk diameter map 460 and functional predictive stalk diameter control zone map 461 can be provided to operator 360 on an operator interface mechanism 318 or to a remote user 366 on a user interface mechanism 364, or both.

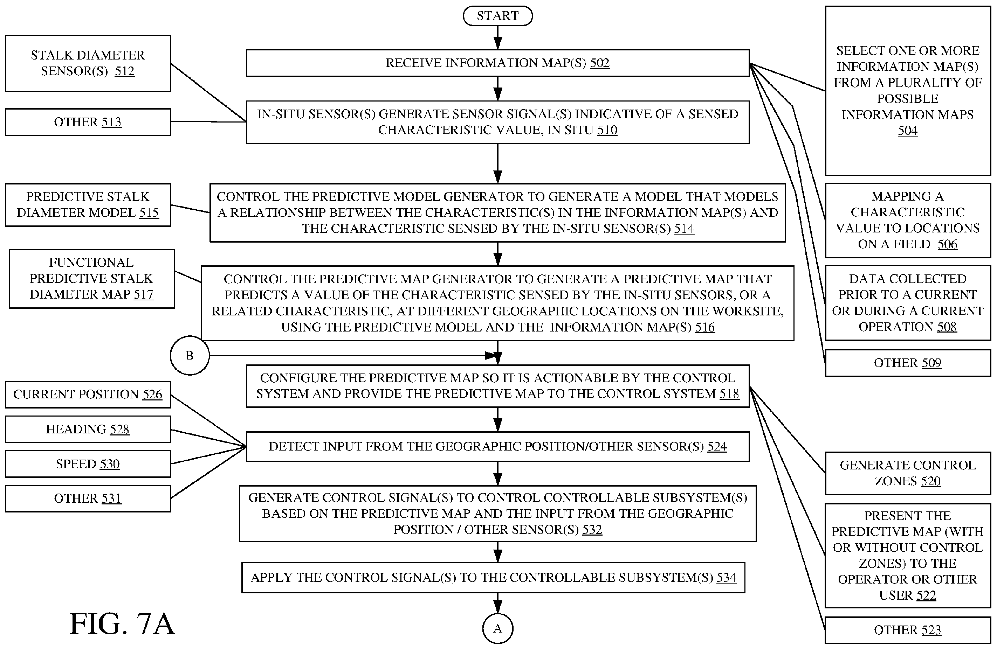

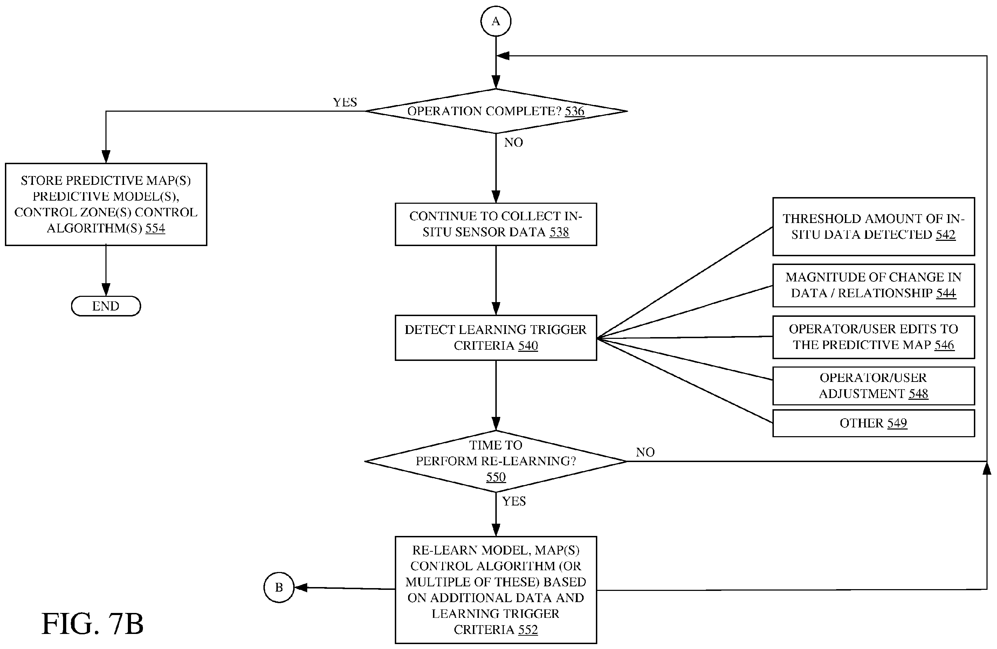

FIGS. 7A-7B (collectively referred to herein as FIG. 7) show a flow diagram illustrating one example of the operation of agricultural harvesting system architecture 300 in generating a predictive model and a predictive map.

At block 502, agricultural harvesting system 300 receives one or more information maps 358. Examples of information maps 358 or receiving information maps 358 are discussed with respect to blocks 504, 506, 508, and 509. As discussed above, information maps 358 map values of a variable, corresponding to a characteristic, to different locations in the field, as indicated at block 506. As indicated at block 504, receiving the information maps 358 may involve map selector 309, operator 360, or a user 364 selecting one or more of a plurality of possible information maps 358 that are available. For instance, one information map 358 may be a crop genotype map, such as crop genotype map 430. Another information map 358 may be a crop population map, such as crop population map 431. Another information map 358 may be a vegetative index (VI) map, such as VI map 432. Another information map 358 may be a topographic map, such as topographic map 433. Another information map 358 may be soil type map, such as soil type map 435. Other types of information maps 358 that map other characteristics (or values thereof) are also contemplated, such as other maps 439. The process by which one or more information maps 358 are selected can be manual, semi-automated, or automated. The information maps 358 can be based on data collected prior to a current operation. For instance, the data may be collected based on aerial images taken during a previous year, or earlier in the current season, or at other times. The data may be based on data detected in ways other than using aerial images. For instance, the data may be collected during a previous operation on the worksite, such an operation during a previous year, or a previous operation earlier in the current season, or at other times. The machines performing those previous operations may be outfitted with one or more sensors that generate sensor data indicative of one or more characteristics. In other examples, the information maps 358 may be predictive maps having predictive values. The predictive information map 358 can be generated by predictive map generator 312 based on a model generated by predictive model generator 310. The data for the information maps 358 can be obtained by agricultural system 300 using communication system 306 and stored in data store 302. The data for the information maps 358 can be obtained by agricultural system 300 using communication system 306 in other ways as well, and this is indicated by block 509 in the flow diagram of FIG. 7.

As mobile machine 100 is operating, in-situ sensors 308 generate sensor data indicative of one or more in-situ data values indicative of a characteristic, for example, stalk diameter sensors 382 generate sensor data indicative of one or more in-situ data values indicative of stalk diameter, as indicated by block 512. In other examples, other sensors, such as command input sensors 384, generate sensor data indicative of one or more in-situ data values indicative of stalk diameter, as indicated by block 513. In some examples, data from in-situ sensors 308 is georeferenced using position, heading, or speed data from geographic position sensor 304 and in some cases also using dimensions of mobile machine 100, such as when deriving the geographic location of a particular stalk diameter sensor 382 (or a corresponding row unit).

Predictive model generator 310 controls the mapped characteristic(s)-to-stalk diameter model generator 441 to generate a model that models the relationship between the mapped values, such as one or more (or two or more) of the crop genotype values, the crop population values, the vegetative index (VI) values, the topographic characteristic values, the soil type values, and other mapped characteristic values contained in the respective information map 358 and the in-situ values sensed by the in-situ sensors 308 as indicated by block 514. Predictive model generator 310 generates a predictive stalk diameter model 450 as indicated by block 515.

The relationship or model generated by predictive model generator 310 is provided to predictive map generator 312. Predictive map generator 312 controls predictive stalk diameter map generator 452 to generate a functional predictive stalk diameter map 460 that predicts stalk diameter (or sensor value(s) indictive of stalk diameter) at different geographic locations in a worksite at which mobile machine 100 is operating using the predictive stalk diameter model 450 and one or more (or two or more) of the information maps 358, such as one or more of the crop genotype map 430, the crop population map 431, the vegetative index (VI) map 432, the topographic map 433, the soil type map 435, and other maps 439 as indicated by block 516.

It should be noted that, in some examples, the functional predictive stalk diameter map 460 may include two or more different map layers. Each map layer may represent a different data type, for instance, a functional predictive stalk diameter map 460 that provides two or more of a map layer that provides predictive stalk diameters based on crop genotype values from crop genotype map 430, a map layer that provides predictive stalk diameters based on crop population values from crop population map 431, a map layer that provides predictive stalk diameters based on VI values from VI map 432, a map layer that provides predictive stalk diameters based on topographic characteristic values from topographic map 433, a map layer that provides predictive stalk diameters based on soil type values from soil type map 435, and a map layer that provides predictive stalk diameters based on other mapped characteristic values from an other map 439. Alternatively, or additionally, functional predictive stalk diameter map 460 may include a map layer that provides predictive stalk diameters based on two or more of crop genotype values from crop genotype map 430, crop population values from crop population map 431, VI values from VI map 432, topographic characteristic values from topographic map 433, soil type values from soil type map 435, and other mapped characteristic values an other map 439. Various other combinations are also contemplated.

At block 518, predictive map generator 312 configures the functional predictive stalk diameter map 460 so that the functional predictive stalk diameter map 460 is actionable (or consumable) by control system 314. Predictive map generator 312 can provide the functional predictive stalk diameter map 460 to the control system 314 or to control zone generator 313, or both. Some examples of the different ways in which the functional predictive stalk diameter map 460 can be configured or output are described with respect to blocks 518, 520, 522, and 523. For instance, predictive map generator 312 configures functional predictive stalk diameter map 460 so that functional predictive stalk diameter map 460 includes values that can be read by control system 314 and used as the basis for generating control signals for one or more of the different controllable subsystems 316 of mobile machine 100, as indicated by block 518.

At block 520, control zone generator 313 can divide the functional predictive stalk diameter map 460 into control zones based on the values on the functional predictive stalk diameter map 460 to generate functional predictive stalk diameter control zone map 461. Contiguouslygeolocated values that are within a threshold value of one another can be grouped into a control zone. The threshold value can be a default threshold value, or the threshold value can be set based on an operator or user input, based on an input from an automated system, or based on other criteria. A size of the zones may be based on a responsiveness of the control system 314, the controllable subsystems 316, based on wear considerations, or on other criteria.

At block 522, predictive map generator 312 configures functional predictive stalk diameter map 460 for presentation to an operator or other user. At block 522, control zone generator 313 can configure functional predictive stalk diameter control zone map 461 for presentation to an operator or other user. When presented to an operator or other user, the presentation of the functional predictive stalk diameter map 460 or of the functional predictive stalk diameter control zone map 461, or both, may contain one or more of the predictive values on the functional predictive stalk diameter map 460 correlated to geographic location, the control zones of functional predictive stalk diameter map control zone map 461 correlated to geographic location, and settings values or control parameters that are used based on the predicted values on predictive map 460 or control zones on predictive control zone map 461. The presentation can, in another example, include more abstracted information or more detailed information. The presentation can also include a confidence level that indicates an accuracy with which the predictive values on predictive map 460 or the control zones on predictive control zone map 461 conform to measured values that may be measured by sensors on mobile machine 100 as mobile machine 100 operates at the field. Further where information is presented to more than one location, an authentication and authorization system can be provided to implement authentication and authorization processes. For instance, there may be a hierarchy of individuals that are authorized to view and change maps and other presented information. By way of example, an on-board display device may show the maps in near real time locally on the machine, or the maps may also be generated at one or more remote locations, or both. In some examples, each physical display device at each location may be associated with a person or a user permission level. The user permission level may be used to determine which display elements are visible on the physical display device and which values the corresponding person may change. As an example, a local operator of mobile machine 100 may be unable to see the information corresponding to the predictive map 460 or predictive control zone map 461, or both, or make any changes to machine operation. A supervisor, such as a supervisor at a remote location, however, may be able to see the predictive map 460 or predictive control zone map 461, or both, on the display but be prevented from making any changes. A manager, who may be at a separate remote location, may be able to see all of the elements on predictive map 460 or predictive control zone map 461, or both, and also be able to change the predictive map 460 or predictive control zone map 461, or both. In some instances, the predictive map 460 or predictive control zone map 461, or both, accessible and changeable by a manager located remotely, may be used in machine control. This is one example of an authorization hierarchy that may be implemented. The predictive map 460 or predictive control zone map 461, or both, can be configured in other ways as well, as indicated by block 523.

At block 524, input from geographic position sensor 304 and other in-situ sensors 308 are received by the control system 314. Particularly, at block 526, control system 314 detects an input from the geographic position sensor 304 identifying a geographic location of mobile machine 100. In some examples, the geographic location of mobile machine 100 can be used, along with machine dimensions, to derive a geographic location of a component of mobile machine 100, such as a geographic location of a particular row unit (or a particular set of deck plates) by subsequent processing of the input from geographic position sensor 304. Block 528 represents receipt by the control system 314 of sensor inputs indicative of trajectory or heading of mobile machine 100, and block 530 represents receipt by the control system 314 of a speed of mobile machine 100. Block 531 represents receipt by the control system 314 of other information from various in-situ sensors 308.

At block 532, control system 314 generates control signals to control the controllable subsystems 316 based on the functional predictive stalk diameter map 460 or the functional predictive stalk diameter control zone map 461, or both, and one or more of the input from the geographic position sensor 304 (or the derived geographic location of one or more particular components of the mobile machine 100), the heading of the mobile machine 100 as provided by heading/speed sensors 325, the speed of the mobile machine as provided by heading/speed sensors 325, and any other in-situ sensors 308. At block 534, control system 314 applies the control signals to the controllable subsystems 316. It will be appreciated that the particular control signals that are generated, and the particular controllable subsystems 316 that are controlled, may vary based upon one or more different things. For example, the control signals that are generated and the controllable subsystems 316 that are controlled may be based on the type of functional predictive stalk diameter map 460 or functional predictive stalk diameter control zone map 461 or both that is being used. Similarly, the control signals that are generated and the controllable subsystems 316 that are controlled and the timing of the control signals can be based on various latencies of mobile machine 100 and the responsiveness of the controllable subsystems 316.

By way of example, deck plate controller(s) 331 of control system 314 can generate control signals to control deck plate subsystem 354, to control a position (or spacing) of one or more deck plates of mobile machine 100. For instance, functional predictive stalk diameter map 460 or functional predictive stalk diameter control zone map 461 can provide predictive stalk diameter values at locations of the field ahead of mobile machine 100 relative to a travel direction and/or route of mobile machine 100, in which case deck plate controllers 335 can generate control signals to control deck plate subsystem 354 based on the predictive stalk diameter values at the locations of the field. In some examples, as described above, deck plate controller(s) 335 may determine a target deck plate spacing based on the predictive stalk diameter values across a width of the header 104. For instance, where the predictive stalk diameter values vary across a width of the header 104, deck plate controller(s) 335 may select, as a target deck plate position (or spacing), a deck plate position (or spacing) that accommodates the largest stalk diameter or, as a target deck plate position (or spacing), a deck plate position (or spacing) that accommodates the greatest number of plants across the width of the header 104. In other examples, such as where control is based on a stalk diameter sensor 382, deck plate controller(s) 335 may select, as a target deck plate position (or spacing), a deck plate position (or spacing) that accommodates the stalk diameter detected by the stalk diameter sensor 382. Deck plate controller 335 may determine, as a target deck plate position (or spacing), a deck plate position (or spacing) based on a sensed or predicted stalk diameter plus a predetermined offset (e.g., a predetermined plus or minus spacing dimension, for instance, plus or minus a centimeter). Control system 314 may determine, as a target deck plate position (or spacing), a deck plate position (or spacing) based on a calculated average sensed stalk diameter across the width of the header or based on the calculated average sensed stalk diameter across the width of the header and a predetermined offset. The predetermined offset may be stored in data store 302 and may be provided by an operator or user, be a manufacturer or expert recommendation, or could be provided in other ways.

These are merely some examples. Control system 314 can generate a variety of different control signals to control a variety of different controllable subsystems 316 based on functional predictive stalk diameter map 460 or functional predictive stalk diameter control zone map 461, or both. Additionally, it will be understood that the timing of the control signals can be based on the travel speed of the mobile machine 100, the location of the mobile machine 100 or the location of a particular component of the mobile machine 100, as well as latencies of the system.

At block 536, a determination is made as to whether the operation has been completed. If the operation is not completed, the processing advances to block 538 where in-situ sensor data from geographic position sensor 304, heading/speed sensors 325, and other in-situ sensors 308 (and perhaps other sensors) continue to be read.

In some examples, at block 540, agricultural system 300 can also detect learning trigger criteria to perform machine learning on one or more of the functional predictive stalk diameter map 460, the functional predictive stalk diameter control zone map 461, the predictive stalk diameter model 450, the zones generated by control zone generator 313, one or more control algorithms implemented by the controllers in the control system 314, and other triggered learning.

The learning trigger criteria can include any of a wide variety of different criteria. Some examples of detecting trigger criteria are discussed with respect to blocks 542, 544, 546, 548, and 549. For instance, in some examples, triggered learning can involve recreation of a relationship used to generate a predictive model when a threshold amount of in-situ sensor data is obtained from in-situ sensors 308. In such examples, receipt of an amount of in-situ sensor data from the in-situ sensors 308 that exceeds a threshold trigger or causes the predictive model generator 310 to generate a new predictive model that is used by predictive map generator 312. Thus, as mobile machine 100 continues an operation, receipt of the threshold amount of in-situ sensor data from the in-situ sensors 308 triggers the creation of a new relationship represented by a new predictive stalk diameter model 450 generated by predictive model generator 310. Further, a new functional predictive stalk diameter map 460, a new functional predictive stalk diameter control zone map 461, or both, can be generated using the new predictive stalk diameter model 450. Block 542 represents detecting a threshold amount of in-situ sensor data used to trigger creation of a new predictive model.

In other examples, the learning trigger criteria may be based on how much the in-situ sensor data from the in-situ sensors 308 are changing, such as over time or compared to previous values. For example, if variations within the in-situ sensor data (or the relationship between the in-situ sensor data and the information in the one or more information maps 358) are within a selected range or is less than a defined amount, or below a threshold value, then a new predictive model is not generated by the predictive model generator 310. As a result, the predictive map generator 312 does not generate a new functional predictive stalk diameter map 460, a new functional predictive stalk diameter control zone map 461, or both. However, if variations within the in-situ sensor data are outside of the selected range, are greater than the defined amount, or are above the threshold value, for example, then the predictive model generator 310 generates a new predictive stalk diameter model 450 using all or a portion of the newly received in-situ sensor data that the predictive map generator 312 uses to generate a new predictive stalk diameter map 460 which can be provided to control zone generator 313 for the creation of a new predictive stalk diameter control zone map 461. At block 544, variations in the in-situ sensor data, such as a magnitude of an amount by which the data exceeds the selected range or a magnitude of the variation of the relationship between the in-situ sensor data and the information in the one or more information maps, can be used as a trigger to cause generation of one or more of a new predictive model 450, a new predictive map 460, and a new predictive control zone map 461. Keeping with the examples described above, the threshold, the range, and the defined amount can be set to default values; set by an operator or user interaction through an interface mechanism; set by an automated system; or set in other ways.

Other learning trigger criteria can also be used. For instance, if predictive model generator 310 switches to a different information map (different from the originally selected information map), then switching to the different information map may trigger re-learning by predictive model generator 310, predictive map generator 312, control zone generator 313, control system 314, or other items. In another example, transitioning of mobile machine 100 to a different area of the field or to a different control zone may be used as learning trigger criteria as well.

In some instances, operator 360 or a user 366 can also edit the functional predictive stalk diameter map 460 or functional predictive stalk diameter control zone map 461 or both. The edits can change a value on the functional predictive stalk diameter map 460, change a size, shape, position, or existence of a control zone on functional predictive stalk diameter control zone map 461, or both. Block 546 shows that edited information can be used as learning trigger criteria.

In some instances, it may also be that operator 360 or user 366 observes that automated control of a controllable subsystem 316, is not what the operator or user desires. In such instances, the operator 360 or user 366 may provide a manual adjustment to the controllable subsystem 316 reflecting that the operator 360 desires the controllable subsystem 316 to operate in a different way than is being commanded by control system 314. Thus, manual alteration of a setting by the operator 360 or user 366 can cause one or more of predictive model generator 310 to relearn predictive stalk diameter model 450, predictive map generator 312 to regenerate functional predictive stalk diameter map 460, control zone generator 313 to regenerate one or more control zones on functional predictive stalk diameter control zone map 461, and control system 314 to relearn a control algorithm or to perform machine learning on one or more of the controller components 329 through 337 in control system 314 based upon the adjustment by the operator 360 or user 366, as shown in block 548. Block 549 represents the use of other triggered learning criteria.

In other examples, relearning may be performed periodically or intermittently based, for example, upon a selected time interval such as a discrete time interval or a variable time interval, as indicated by block 550.

If relearning is triggered, whether based upon learning trigger criteria or based upon passage of a time interval, as indicated by block 550, then one or more of the predictive model generator 310, predictive map generator 312, control zone generator 313, and control system 314 performs machine learning to generate a new predictive model, a new predictive map, a new control zone, and a new control algorithm, respectively, based upon the learning trigger criteria or based upon the passage of a time interval. The new predictive model, the new predictive map, the new control zone, and the new control algorithm are generated using any additional data that has been collected since the last learning operation was performed. Performing relearning is indicated by block 552.

If the operation has not been completed, operation moves from block 552 to block 518 such that the new predictive model, the new predictive map, the new control zone, and/or the new predictive control algorithms can be used to control mobile machine 100. If the operation has been completed, operation moves from block 552 to block 554 where one or more of the functional predictive stalk diameter map 460, functional predictive stalk diameter control zone map 461 ,the predictive stalk diameter model 450, control zone(s), and control algorithm(s), are stored. The predictive map 460, predictive control zone map 461, and predictive model 450, the control zone(s), and the control algorithm(s) may be stored locally on data store 302 or sent to a remote system using communication system 306 for later use.

FIGS. 8A-B (collectively referred to herein as FIG. 8) show a flow diagram illustrating one example of the operation of agricultural harvesting system architecture 300 in controlling operation of a mobile agricultural harvesting machine 100.

At block 602, agricultural harvesting system 300 receives one or more predictive stalk diameter maps. Examples of predictive stalk diameter maps or receiving predictive stalk diameter maps are discussed with respect to blocks 604, 606, and 609. As indicated at block 604, agricultural harvesting system 300 can receive, as a predictive stalk diameter map, a functional predictive stalk diameter map 460 or a functional predictive stalk diameter control zone map 461, or both. As indicated at block 606, agricultural harvesting system 300 can receive, as a predictive stalk diameter map, a predictive stalk diameter map 357. Agricultural harvesting system 300 can receive other types of predictive stalk diameter maps, as indicated by block 609.

At block 610, as mobile machine 100 is operating, in-situ stalk diameter sensors 382 generate sensor data indicative of one or more stalk diameters.

At block 612, agricultural harvesting system 300 (e.g., prediction confidence determination logic 342 of confidence system 340) determines a confidence level of the predictive data, that is, a confidence level of the predictive stalk diameter map received at block 602. As indicated by block 614, the agricultural harvesting system 300 (e.g., prediction confidence determination logic 342 of confidence system 340) may utilize predictive data confidence criteria (of confidence criteria data 367) in determining a confidence level in the predictive stalk diameter map. The confidence level can be expressed as a value, such as a number, a percentage, a scaled value (e.g., 1-10 or A-F, etc.), as well as various other values. The agricultural harvesting system 300 (e.g., prediction confidence determination logic 342 of confidence system 340) can determine a confidence level in the predictive stalk diameter map in a variety of other ways, as indicated by block 615.

At block 616, agricultural harvesting system 300 (e.g., sensor confidence determination logic 344 of confidence system 340) determines a confidence level of the sensor data, that is, a confidence level of the stalk diameter sensor data received at block 610. As indicated by block 618, the agricultural harvesting system 300 (e.g., sensor confidence determination logic 344 of confidence system 340) may utilize sensor data confidence criteria (of confidence criteria data 367) in determining a confidence level in the stalk diameter sensor data. The confidence level can be expressed as a value, such as a number, a percentage, a scaled value (e.g., 1-10 or A-F, etc.), as well as various other values. The agricultural harvesting system 300 (e.g., sensor confidence determination logic 344 of confidence system 340) can determine a confidence level in the stalk diameter sensor data in a variety of other ways, as indicated by block 619.

At block 620, agricultural harvesting system 300 (e.g., control data selector logic 346 of confidence system 340) selects one of the predictive stalk diameter map or the stalk diameter sensor data for use in control of the mobile agricultural harvesting machine 100. In selecting the data to use for control (e.g., selecting control data), agricultural harvesting system 300 (e.g., control data selector logic 346 of confidence system 340) may compare the confidence level of the predictive stalk diameter map to the confidence level of the stalk diameter sensor data, as indicated by block 622. For example, agricultural harvesting system 300 (e.g., control data selector logic 346 of confidence system 340) may select, as the control data, whichever of the predictive stalk diameter map or the stalk diameter sensor data has a higher confidence level. In selecting the data to use for control, agricultural harvesting system 300 (e.g., control data selector logic 346 of confidence system 340) may compare the confidence level of both the predictive stalk diameter map and the stalk diameter sensor data to a confidence level threshold. For example, agricultural harvesting system 300 (e.g., control data selector logic 346 of confidence system 340) may select, as the control data, whichever of the predictive stalk diameter map or the stalk diameter sensor data has a confidence level that satisfies the confidence level threshold. Where both have a confidence level that satisfies the confidence level threshold, agricultural harvesting system 300 (e.g., control data selector logic 346 of confidence system 340) may select whichever of the predictive stalk diameter map or the stalk diameter sensor data has the larger confidence level. The selection may further be based upon preferences, as indicated by block 626. For example, where both the predictive stalk diameter map and the stalk diameter sensor data have confidence levels that satisfy the confidence level threshold, agricultural harvesting system 300 (e.g., control data selector logic 346 of confidence system 340) may select one of the two based upon preset or preselected (e.g., by an operator or user) preferences. For example, where both satisfy the threshold, it may be preferred to use the predictive stalk diameter map for control. In another example, where neither the predictive stalk diameter map nor the stalk diameter sensor data has a confidence level that satisfies the threshold, agricultural harvesting system 300 (e.g., control data selector logic 346 of confidence system 340) may select one of the two based upon a preset or preselected preference. The agricultural harvesting system 300 (e.g., control data selector logic 346 of confidence system 340) can select one of the predictive stalk diameter map or the stalk diameter sensor data for control in various other ways, as indicated by block 627 The selected control data (e.g., either the selected predictive stalk diameter map or the selected stalk diameter sensor data) is provided to the control system 314 for use in controlling the mobile agricultural harvesting machine 100 (e.g., controlling deck plate subsystem 354).

If a predictive stalk diameter map is selected as the control data at block 620, then the method proceeds to block 628. If stalk diameter sensor data is selected as the control data at block 620, then the method proceeds to block 636.

At block 628, where a predictive stalk diameter map was selected as the control data, then input from geographic position sensor 304 and other in-situ sensors 308 are received by the control system 314. Particularly, at block 630, control system 314 detects an input from the geographic position sensor 304 identifying a geographic location of mobile machine 100. In some examples, the geographic location of mobile machine 100 can be used, along with machine dimensions, to derive a geographic location of a component of mobile machine 100, such as a geographic location of a particular row unit (or a particular set of deck plates) by subsequent processing of the input from geographic position sensor 304. Block 632 represents receipt by the control system 314 of sensor inputs indicative of trajectory or heading of mobile machine 100, and block 634 represents receipt by the control system 314 of a speed of mobile machine 100. Block 635 represents receipt by the control system 314 of other information from various in-situ sensors 308. The method proceeds from block 628 to block 636.

At block 636, control system 314 generates control signals to control the controllable subsystems 316 based on the selected control data (e.g., the selected predictive stalk diameter map or the selected stalk diameter sensor data). Where the selected control data is a predictive stalk diameter map, control system 314 generates control signals based further on one or more of the input from the geographic position sensor 304 (or the derived geographic location of one or more particular components of the mobile machine 100), the heading of the mobile machine 100 as provided by heading/speed sensors 325, the speed of the mobile machine as provided by heading/speed sensors 325, and any other in-situ sensors 308. In some examples, as indicated by block 637, control system 314 (e.g., deck plate controller(s) 335) determines a target deck plate position (or spacing) for one or more deck plates. Control system 314 (e.g., deck plate controller(s) 335) may determine, as a target deck plate position (or spacing), a deck plate position (or spacing) that accommodates the largest stalk diameter across a width of the header 104, as indicated by the predictive stalk diameter map. Control system 314 (e.g., deck plate controller(s) 335) may determine, as a target deck plate position (or spacing), a deck plate position (or spacing) that accommodates the greatest number of plants across a width of the header 104. Control system 314 (e.g., deck plate controller(s) 335) may determine, as a target deck plate position (or spacing), a deck plate position (or spacing) that accommodates the stalk diameter sensed by a stalk diameter sensor 382. Control system 314 may determine, as a target deck plate position (or spacing), a deck plate position (or spacing) based on a sensed or predicted stalk diameter and a predetermined offset (e.g., a predetermined plus or minus spacing dimension, for instance, plus or minus a centimeter). The predetermined offset may be stored in data store 302 and may be provided by an operator or user, be a manufacturer or expert recommendation, or could be provided in other ways. Control system 314 may determine, as a target deck plate position (or spacing), a deck plate position (or spacing) based on a calculated average sensed stalk diameter across the width of the header or based on the calculated average sensed stalk diameter across the width of the header and a predetermined offset. Control system 314 (e.g., deck plate controller(s) 335) then generates the control signals based further on the determined target deck plate position (or spacing).

At block 638, control system 314 applies the control signals to the controllable subsystems 316. In one example, control system 314 (e.g., deck plate controller(s) 335) apply control signals to control deck plate subsystem 354 to control the position (or spacing) of one or more deck plates of mobile agricultural harvesting machine 100, as indicated by block 640. Various other controllable subsystems 316 can also be controlled, as indicated by block 641. Additionally, it will be understood that the timing of the control signals can be based on the travel speed of the mobile machine 100, the location of the mobile machine 100 or the location of a particular component of the mobile machine 100, as well as latencies of the system.

At block 642, a determination is made as to whether the operation has been completed. If the operation has not been completed, the processing returns to block 602. If the operation has been completed, the processing proceeds to block 644 where one or more of the predictive stalk diameter maps, stalk diameter sensor data, and control algorithm(s), are stored. The predictive stalk diameter maps, stalk diameter sensor data, and control algorithms may be stored locally on data store 302 or sent to a remote system using communication system 306 for later use.

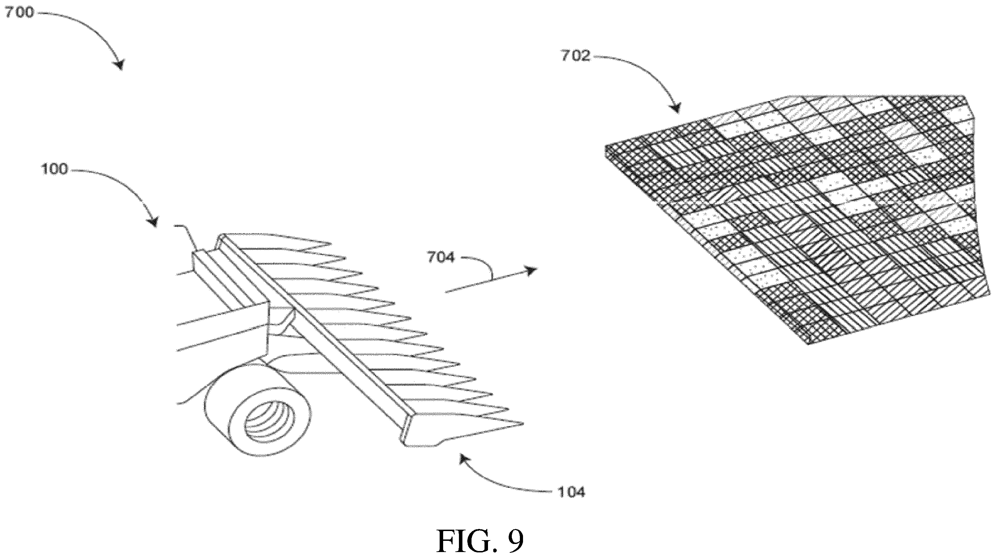

FIG. 9 is a pictorial illustration showing one example of an agricultural harvesting environment 700. As illustrated, agricultural harvesting environment 700 includes mobile agricultural harvesting machine 100 and predictive stalk diameter map layer 702. As illustrated, predictive stalk diameter layer 702 illustrates predictive stalk diameter values across a width of header 104 and in front of mobile agricultural harvesting machine 100 relative to a direction of travel 704. As can be seen in FIG. 9, the predictive stalk diameter values can vary across a width of header 104 and along the direction of travel of the agricultural harvesting machine 400. The predictive stalk diameter values in predictive stalk diameter map layer 702 can be provided by a predictive stalk diameter map, such as a predictive stalk diameter map 357, a functional predictive stalk diameter map 460, a functional predictive stalk diameter control zone map 461, or another type of predictive stalk diameter map. It should be noted that different values or different ranges of values can be displayed in different ways and differentiated from one another, such as by use of different colors, shades, patterns, dimensions, symbols, etc. Further, as illustrated in FIG. 9, map layer 702 comprises a grid that is overlayed the field. Each square of the grid can represent an individual plant or can represent a zone which may include a plurality of individual plants. Thus, the value of the square may represent a predictive stalk diameter for an individual plants or a predictive stalk diameter for each of a plurality of individual plants in the area of the field represented by the square.

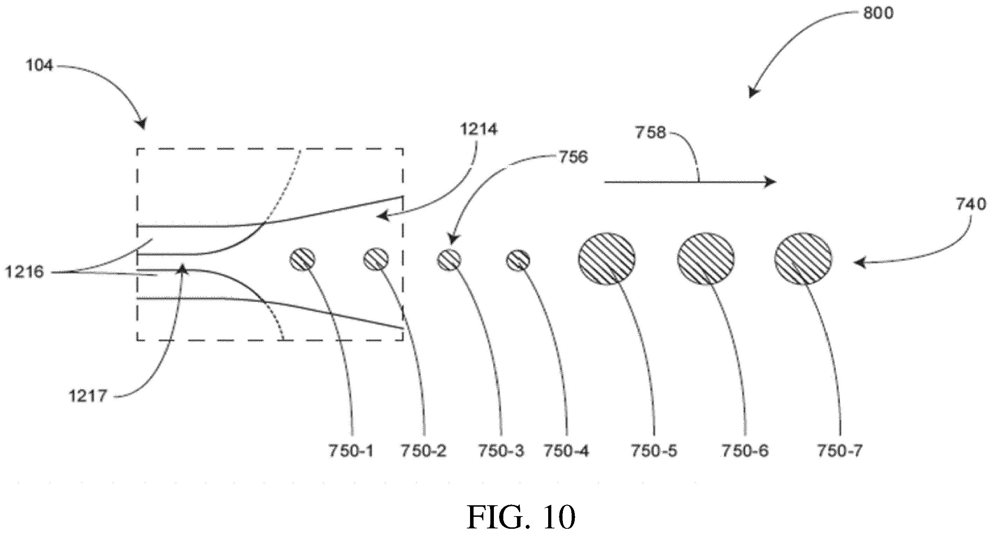

FIG. 10 is a pictorial illustration showing one example of an agricultural harvesting environment 800. As illustrated, agricultural harvesting environment 800 a row unit 1214 (that includes deck plates 1226), predictive stalk diameter values 750 (illustratively 750-1 through 750-6) arranged in a crop row 740, each separate predictive stalk diameter value 750 is indicative of a predictive stalk diameter for a respective crop plant in crop row 740. As can be seen, the predictive stalk diameter values for crop plants in a crop row 740 can vary along the direction of travel 758 of the row unit 1214. In a system where control of the deck plates 1226 relies solely on a stalk diameter sensor, it may be that the deck plate position (or spacing) (i.e., the dimensions of gap 1224) are such that the stalk of the plant represented by predictive values 750-5 through 750-7 will not be accommodated. For example, in such a system, the spacing of the deck plates 1224 at the time the row unit 1214 encounters the plant represented by value 750-5 may be based on the stalk diameter of the plant represented by values 750-4. In a system that can utilize predictive stalk diameter values, such as those from a predictive stalk diameter map (e.g., 357, 460, 461, etc.), the position (or spacing) of the deck plates 1226 can be adjusted based on predictive stalk diameter values ahead of the row unit 1214 and prior to the row unit 1214 reaching those plants. Additionally, given the travel speed of the mobile machine 100 and the latency of the deck plate subsystem 540, it may be that the deck plates are adjusted based on the value 750-5 even prior to the value 750-4. For instance, in the illustrated example, control of the deck plates 1226 based on the value 750-5 may occur at point 756 such that the deck plates 1226 are positioned (or spaced) to accommodate the plant represented by value 750-5 at the time the row unit 1214 reaches the plant. Thus, in a system utilizing predictive stalk diameter values, the travel speed and latency of the machine 100 can be accounted for such that the position (or spacing) of the deck plates 1226 can accommodate all the crops along the travel path 758 of the machine 100.

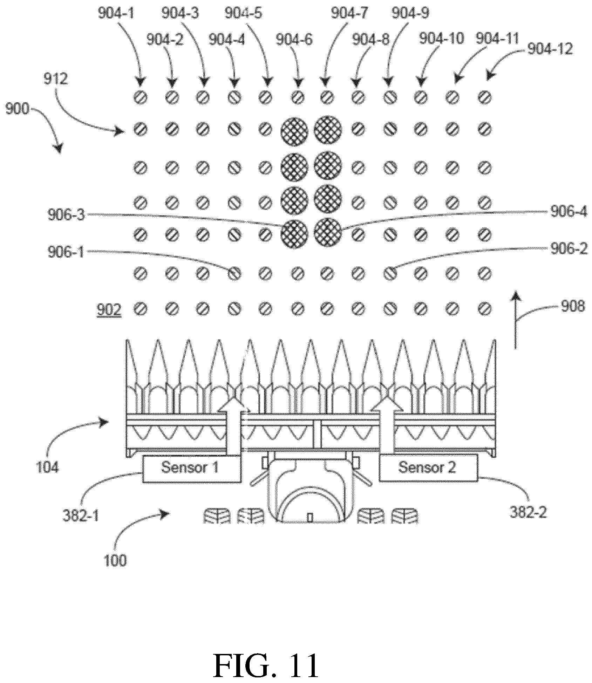

FIG. 11 is a pictorial illustration showing one example of an agricultural harvesting environment 900. As illustrated, agricultural harvesting environment 900 includes mobile agricultural harvesting machine 100, field 902, crop rows 904 (illustratively 904-1 through 904-12), and a plurality of predictive stalk diameter values 906 arranged across the width of header 104 and in rows 904 along the direction of travel 908 of machine 100. While only a number of the stalk diameter values 906 in environment 900 are indicated by arrow in FIG. 11, it will be understood that the stalk diameter values are shown as dots or filled in circles in FIG. 11 and are of a greater number than those specifically pointed to in FIG. 11. As shown in FIG. 11, each row 904 includes seven individual predictive stalk diameter values 906 each representative of a predictive stalk diameter of a respective plant in the corresponding row 904.

As illustrated in FIG. 11, header 104 includes two stalk diameter sensors 382-1 and 382-2 (represented by "SENSOR 1" and "SENSOR 2", respectively) which are arranged on separate row units. Stalk diameter sensor 382-1("SENSOR 1") is configured to sensed stalk diameters in row 904-4 and stalk diameter sensor 382-2 ("SENSOR 2') is configured to sense stalk diameters in row 904-9. As shown in FIG. 11, the stalk diameters of plants can vary along the direction of travel 904 (e.g., can vary along the row(s)) and across a width of the header 104 (e.g., can vary across each line of crops to be engaged by the header 104 across the width of the header 104, that is, a plurality of individual crop plants are engaged by the header 104 across its width at a given time that can be said to form a line and their diameters can vary). Even when utilizing multiple stalk diameter sensors, the spacing of the deck plates may be less than ideal. For example, in rows 904-6 and 904-7, it can be seen that the stalk diameter of plants in those rows increases beginning at values 906-3 and 906-4 respectively. In a case where the control of the deck plates is based on the stalk diameter sensors, the spacing of the deck plates may be based on the values 906-1 and 906-2 at the time the header encounters the plants at values 906-3 and 906-4 and thus, the row units harvesting crop rows 904-6 and 904-7 may not accommodate the plants represented by the values 906-3 and 906-4. In a system that utilizes predictive stalk diameter maps, on the other hand, the position (or spacing) of the deck plates can be adjusted to accommodate the plants represented by the values 906-3 and 906-4. The individual deck plates for the row units harvesting crop rows 904-6 and 904-7 can be adjusted. Or, even for a system that simultaneously positions (or spaces) all of the deck plates (such as the example shown in FIG. 3), the deck plate controller(s) 335 can determine a target deck plate position such as a position (or spacing) large enough to accommodate the plants represented by values 906-3 and 906-4), or a position (or spacing) that accommodates the greatest number of plants (e.g., large enough to accommodate the other plants across the width of header but not large enough to accommodate the plants represented by 906-3 and 906-4 where such a width would result in overall yield loss due to increased butt shelling), or a position (or spacing) based on a sensed or predicted stalk diameter and a predetermined offset.

It will be noted that while the examples in FIGS. 10-11 show predictive values on a plant-by-plant basis, in other examples, the predictive values may represent an area (or zone) of the field that includes multiple individual plants.

The examples herein describe the generation of a predictive model and, in some examples, the generation of a functional predictive map based on the predictive model. The examples described herein are distinguished from other approaches by the use of a model which is at least one of multi-variate or site-specific (i.e., georeferenced, such as map-based). Furthermore, the model is revised as the work machine is performing an operation and while additional in-situ sensor data is collected. The model may also be applied in the future beyond the current worksite. For example, the model may form a baseline (e.g., starting point) for a subsequent operation at a different worksite or at the same worksite at a future time.

The revision of the model in response to new data may employ machine learning methods. Without limitation, machine learning methods may include memory networks, Bayes systems, decisions trees, Cluster Analysis, Eigenvectors, Eigenvalues and Machine Learning, Evolutionary and Genetic Algorithms, Expert Systems/Rules, Support Vector Machines, Engines/Symbolic Reasoning, Generative Adversarial Networks (GANs), Graph Analytics and ML, Linear Regression, Logistic Regression, LSTMs and Recurrent Neural Networks (RNNSs), Convolutional Neural Networks (CNNs), MCMC, Random Forests, Reinforcement Learning or Reward-based machine learning. Learning may be supervised or unsupervised.

Model implementations may be mathematical, making use of mathematical equations, empirical correlations, statistics, tables, matrices, and the like. Other model implementations may rely more on symbols, knowledge bases, and logic such as rule-based systems. Some implementations are hybrid, utilizing both mathematics and logic. Some models may incorporate random, nondeterministic, or unpredictable elements. Some model implementations may make uses of networks of data values such as neural networks. These are just some examples of models.

The predictive paradigm examples described herein differ from non-predictive approaches where an actuator or other machine parameter is fixed at the time the machine, system, or component is designed, set once before the machine enters the worksite, is reactively adjusted manually based on operator perception, or is reactively adjusted based on a sensor value.

The functional predictive map examples described herein also differ from other map-based approaches. In some examples of these other approaches, an a priori control map is used without any modification based on in-situ sensor data or else a difference determined between data from an in-situ sensor and a predictive map are used to calibrate the in-situ sensor. In some examples of the other approaches, sensor data may be mathematically combined with a priori data to generate control signals, but in a location-agnostic way; that is, an adjustment to an a priori, georeferenced predictive setting is applied independent of the location of the work machine at the worksite. The continued use or end of use of the adjustment, in the other approaches, is not dependent on the work machine being in a particular defined location or region within the worksite.

In examples described herein, the functional predictive maps and predictive actuator control rely on obtained maps and in-situ data that are used to generate predictive models. The predictive models are then revised during the operation to generate revised functional predictive maps and revised actuator control. In some examples, the actuator control is provided based on functional predictive control zone maps which are also revised during the operation at the worksite. In some examples, the revisions (e.g., adjustments, calibrations, etc.) are tied to regions or zones of the worksite rather than to the whole worksite or some non-georeferenced condition. For example, the adjustments are applied to one or more areas of a worksite to which an adjustment is determined to be relevant (e.g., such as by satisfying one or more conditions which may result in application of an adjustment to one or more locations while not applying the adjustment to one or more other locations), as opposed to applying a change in a blanket way to every location in a non-selective way.

In some examples described herein, the models determine and apply those adjustments to selective portions or zones of the worksite based on a set of a priori data, which, in some instances, is multivariate in nature. For example, adjustments may, without limitation, be tied to defined portions of the worksite based on site-specific factors such as topography, soil type, crop variety, soil moisture, as well as various other factors, alone or in combination. Consequently, the adjustments are applied to the portions of the field in which the site-specific factors satisfy one or more criteria and not to other portions of the field where those site-specific factors do not satisfy the one or more criteria. Thus, in some examples described herein, the model generates a revised functional predictive map for at least the current location or zone, the unworked part of the worksite, or the whole worksite.

As an example, in which the adjustment is applied only to certain areas of the field, consider the following. The system may determine that a detected in-situ characteristic value varies from a predictive value of the characteristic such as by a threshold amount. This deviation may only be detected in areas of the field where the elevation of the worksite is above a certain level. Thus, the revision to the predictive value is only applied to other areas of the worksite having elevation above the certain level. In this simpler example, the predictive characteristic value and elevation at the point the deviation occurred and the detected characteristic value and elevation at the point the deviation cross the threshold are used to generate a linear equation. The linear equation is used to adjust the predictive characteristic value in areas of the worksite not yet operated at during the current operation (e.g., unsprayed areas, unplanted areas, or untilled areas during the current operation) in the functional predictive map as a function of elevation and the predicted characteristic value. This results in a revised functional predictive map in which some values are adjusted while others remain unchanged based on selected criteria, e.g., elevation as well as threshold deviation. The revised functional map is then used to generate a revised functional control zone map for controlling the machine.

As an example, without limitation, consider an instance of the paradigm described herein which is parameterized as follows.

One or more maps of the field are obtained, such as one or more of a crop genotype map, a crop population map, a vegetative index (VI) map, a topographic map, a soil type map, and another type of map.

In-situ sensors generate sensor data indicative of in-situ characteristic values, such as in-situ stalk diameter values.

A predictive model generator generates one or more predictive models based on the one or more obtained maps and the in-situ sensor data, such as a predictive stalk diameter model.

A predictive map generator generates one or more functional predictive maps based on a model generated by the predictive model generator and the one or more obtained maps. For example, the predictive map generator may generate a functional predictive stalk diameter map that maps predictive stalk diameter values to one or more locations on the worksite based on a predictive stalk diameter model and the one or more obtained maps.

Control zones, which include machine settings values, can be incorporated into the functional predictive stalk diameter map to generate a functional predictive stalk diameter control zone map.

As the mobile machine continues to operate at the worksite, additional in-situ sensor data is collected. A learning trigger criteria can be detected, such as threshold amount of additional in-situ sensor data being collected, a magnitude of change in a relationship (e.g., the in-situ characteristic values varies to a certain [e.g., threshold] degree from a predictive value of the characteristic), and operator or user makes edits to the predictive map(s) or to a control algorithm, or both, a certain (e.g., threshold) amount of time elapses, as well as various other learning trigger criteria. The predictive model(s) are then revised based on the additional in-situ sensor data and the values from the obtained maps. The functional predictive map(s) or the functional predictive control zone map(s), or both, are then revised based on the revised model(s) and the values in the obtained map(s).

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, components, logic, generators, and interactions. It will be appreciated that any or all of such systems, components, logic, generators, and interactions may be implemented by hardware items, such as one or more processors, one or more processors executing computer executable instructions stored in memory, memory, or other processing components, some of which are described below, that perform the functions associated with those systems, components, logic, generators, or interactions. In addition, any or all of the systems, components, logic, generators, and interactions may be implemented by software that is loaded into a memory and is subsequently executed by one or more processors or one or more servers or other computing component(s), as described below. Any or all of the systems, components, logic, generators, and interactions may also be implemented by different combinations of hardware, software, firmware, etc., some examples of which are described below. These are some examples of different structures that may be used to implement any or all of the systems, components, logic, generators, and interactions described above. Other structures may be used as well.

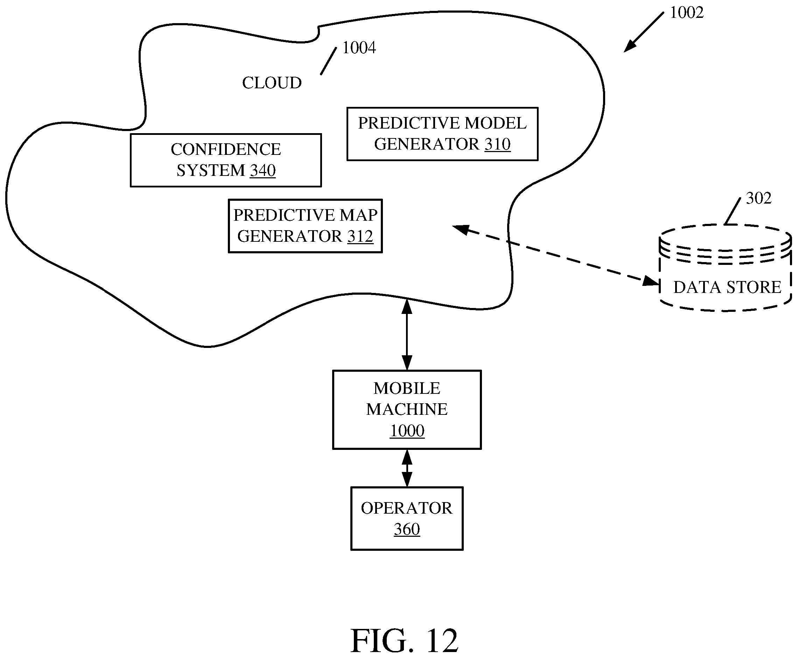

FIG. 12 is a block diagram of mobile agricultural harvesting machine 1000, which may be similar to mobile agricultural harvesting machine 100 shown in FIG. 4. The mobile agricultural harvesting machine 1000 communicates with elements in a remote server architecture 1002. In some examples, remote server architecture 1002 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in FIG. 4 as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 12, some items are similar to those shown in FIG. 4 and those items are similarly numbered. FIG. 12 specifically shows that one or more of predictive model generator 310, predictive map generator 312, and confidence system 340 may be located at a server location 1004 that is remote from the mobile machine 1000. Therefore, in the example shown in FIG. 12, mobile machine 1000 accesses systems through remote server location 1004. In other examples, various other items may also be located at server location 1004, such as data store 302, map selector 309, predictive model 311, functional predictive maps 263 (including predictive maps 264 and predictive control zone maps 265), control zone generator 313, control system 314, and processing system 338.

FIG. 12 also depicts another example of a remote server architecture. FIG. 12 shows that some elements of FIG. 4 may be disposed at a remote server location 1004 while others may be located elsewhere. By way of example, data store 302 may be disposed at a location separate from location 1004 and accessed via the remote server at location 1004. Regardless of where the elements are located, the elements can be accessed directly by mobile machine 1000 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users, or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated or manual information collection system. As the mobile machine 1000 comes close to the machine containing the information collection system, such as a fuel truck prior to fueling, the information collection system collects the information from the mobile machine 1000 using any type of ad-hoc wireless connection. The collected information may then be forwarded to another network when the machine containing the received information reaches a location where wireless telecommunication service coverage or other wireless coverage is available. For instance, a fuel truck may enter an area having wireless communication coverage when traveling to a location to fuel other machines or when at a main fuel storage location. All of these architectures are contemplated herein. Further, the information may be stored on the mobile machine 1000 until the mobile machine 1000 enters an area having wireless communication coverage. The mobile machine 1000, itself, may send the information to another network.

It will also be noted that the elements of FIG. 4, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 1002 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

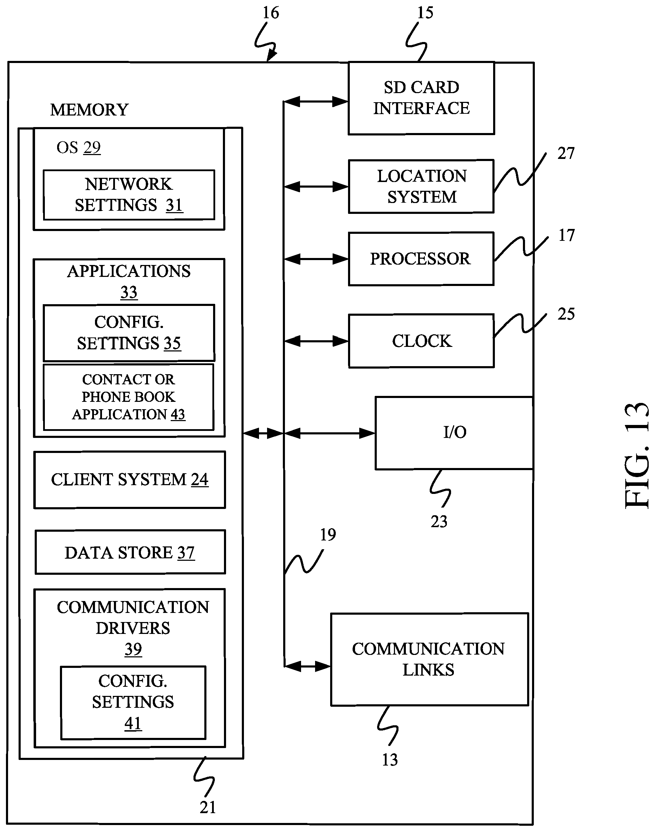

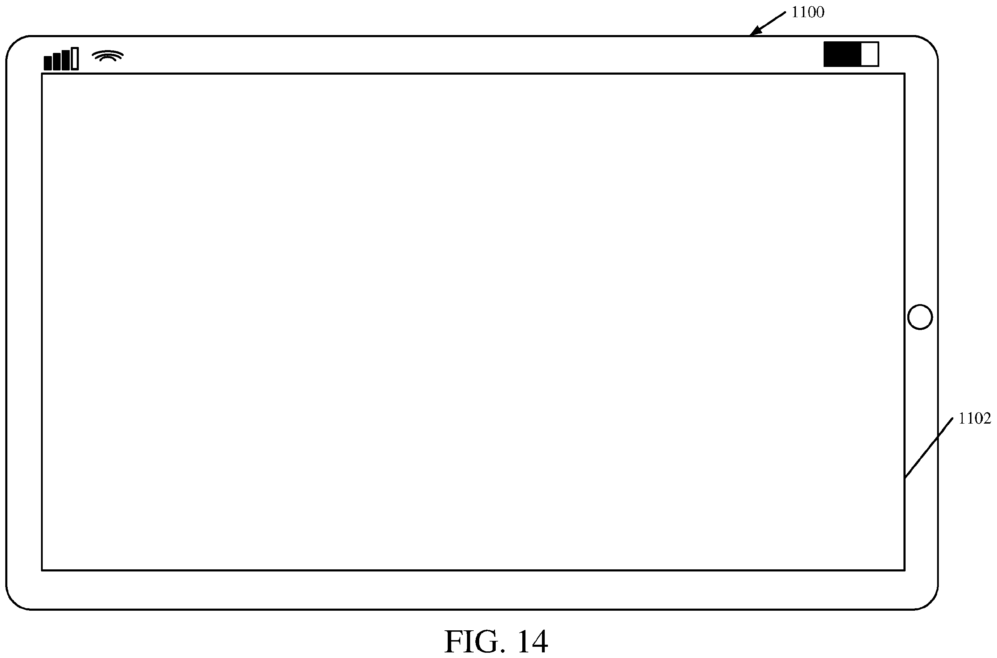

FIG. 13 is a simplified block diagram of one illustrative example of a handheld or mobile computing device that can be used as a user's or client's handheld device 16, in which the present system (or parts of it) can be deployed. For instance, a mobile device can be deployed in the operator compartment of mobile machine 100 for use in generating, processing, or displaying the maps discussed above. FIGS. 14-15 are examples of handheld or mobile devices.

FIG. 13 provides a general block diagram of the components of a client device 16 that can run some components shown in FIG. 4, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other figures described herein) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 may also include computer storage media (described below). Memory 21 stores computer readable instructions that, when executed by processor 17, cause the processor to perform computer-implemented steps or functions according to the instructions. Processor 17 may be activated by other components to facilitate their functionality as well.

FIG. 14 shows one example in which device 16 is a tablet computer 1100. In FIG. 14, computer 1100 is shown with user interface display screen 1102. Screen 1102 can be a touch screen or a pen-enabled interface that receives inputs from a pen or stylus. Tablet computer 1100 may also use an on-screen virtual keyboard. Of course, computer 1100 might also be attached to a keyboard or other user input device through a suitable attachment mechanism, such as a wireless link or USB port, for instance. Computer 1100 may also illustratively receive voice inputs as well.

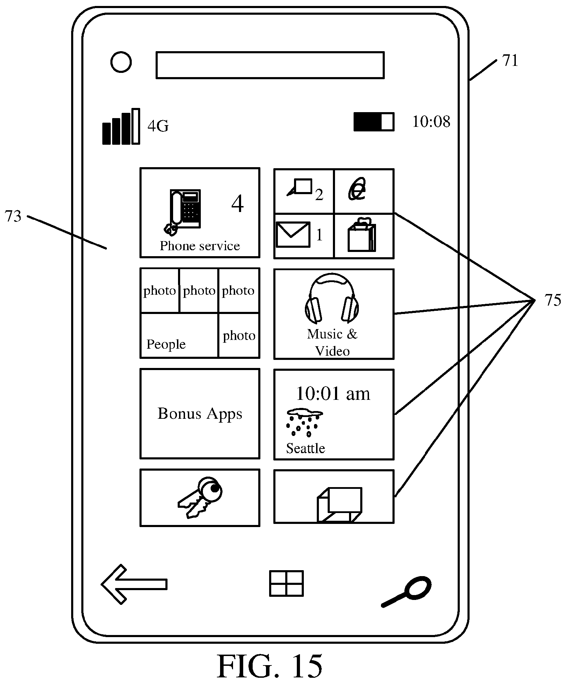

FIG. 15 is similar to FIG. 14 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

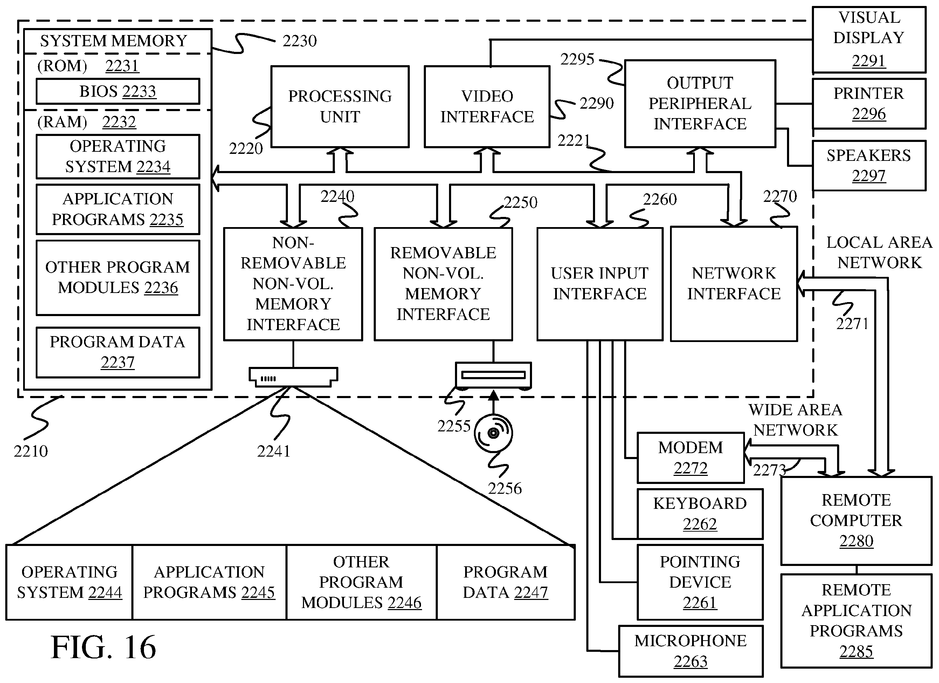

FIG. 16 is one example of a computing environment in which elements of previous figures described herein can be deployed. With reference to FIG. 16, an example system for implementing some embodiments includes a computing device in the form of a computer 2210 programmed to operate as discussed above. Components of computer 2210 may include, but are not limited to, a processing unit 2220 (which can comprise processors or servers from previous figures described herein), a system memory 2230, and a system bus 2221 that couples various system components including the system memory to the processing unit 2220. The system bus 2221 may be any of several types of bus structures including a memory bus or memory controller, a peripheral bus, and a local bus using any of a variety of bus architectures. Memory and programs described with respect to previous figures described herein can be deployed in corresponding portions of FIG. 16.

Computer 2210 typically includes a variety of computer readable media. Computer readable media may be any available media that can be accessed by computer 2210 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 2210. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 2230 includes computer storage media in the form of volatile and/or nonvolatile memory or both such as read only memory (ROM) 2231 and random access memory (RAM) 2232. A basic input/output system 2233 (BIOS), containing the basic routines that help to transfer information between elements within computer 2210, such as during start-up, is typically stored in ROM 2231. RAM 2232 typically contains data or program modules or both that are immediately accessible to and/or presently being operated on by processing unit 2220. By way of example, and not limitation, FIG. 16 illustrates operating system 2234, application programs 2235, other program modules 2236, and program data 2237.

The computer 2210 may also include other removable/non-removable volatile/nonvolatile computer storage media. By way of example only, FIG. 16 illustrates a hard disk drive 2241 that reads from or writes to non-removable, nonvolatile magnetic media, an optical disk drive 2255, and nonvolatile optical disk 2256. The hard disk drive 2241 is typically connected to the system bus 2221 through a non-removable memory interface such as interface 2240, and optical disk drive 2255 are typically connected to the system bus 2221 by a removable memory interface, such as interface 2250.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 16, provide storage of computer readable instructions, data structures, program modules and other data for the computer 2210. In FIG. 16, for example, hard disk drive 1241 is illustrated as storing operating system 2244, application programs 2245, other program modules 2246, and program data 2247. Note that these components can either be the same as or different from operating system 2234, application programs 2235, other program modules 2236, and program data 2237.

A user may enter commands and information into the computer 2210 through input devices such as a keyboard 2262, a microphone 2263, and a pointing device 2261, such as a mouse, trackball or touch pad. Other input devices (not shown) may include a joystick, game pad, satellite dish, scanner, or the like. These and other input devices are often connected to the processing unit 2220 through a user input interface 2260 that is coupled to the system bus, but may be connected by other interface and bus structures. A visual display 2291 or other type of display device is also connected to the system bus 2221 via an interface, such as a video interface 2290. In addition to the monitor, computers may also include other peripheral output devices such as speakers 2297 and printer 2296, which may be connected through an output peripheral interface 2295.

The computer 2210 is operated in a networked environment using logical connections (such as a controller area network - CAN, local area network - LAN, or wide area network WAN) to one or more remote computers, such as a remote computer 2280.

When used in a LAN networking environment, the computer 2210 is connected to the LAN 2271 through a network interface or adapter 2270. When used in a WAN networking environment, the computer 2210 typically includes a modem 2272 or other means for establishing communications over the WAN 2273, such as the Internet. In a networked environment, program modules may be stored in a remote memory storage device. FIG. 16 illustrates, for example, that remote application programs 2285 can reside on remote computer 2280.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of the claims.

## Claims

1. An agricultural harvesting system (300) comprising:
an in-situ sensor (308, 382) configured to detect a value of a stalk diameter at a worksite and generate stalk diameter sensor data (440) indicative of the detected value of the stalk diameter;
a confidence system (340) configured to determine (612) a confidence level of predictive stalk diameter data (357, 460, 461), the predictive stalk diameter data indicating predictive stalk diameter values;
a control system (314) configured to generate a control signal to control a position of a deck plate (1226) of a mobile agricultural harvesting machine (100) based on control data;
**characterized in that** the confidence system (340) is configured to:
determine (610) a confidence level of the stalk diameter sensor data; and
select (620) one of the predictive stalk diameter data or the stalk diameter sensor data as control data based on the confidence level of the predictive stalk diameter data and the confidence level of the stalk diameter sensor data; and
that the control system (314) is configured to generate the control signal to control the position of the deck plate (1226) of the mobile agricultural harvesting machine (100) based on the selected control data.

2. The agricultural harvesting system of claim 1, wherein the predictive stalk diameter data comprises a predictive stalk diameter map (357, 460) that maps predictive stalk diameter values to different geographic location in the worksite and wherein confidence system is configured to determine the confidence level of the predictive stalk diameter map based on predictive data confidence criteria (367).

3. The agricultural harvesting system of claim 2, wherein the predictive data confidence criteria (367) includes one or more of:
a number of sensor readings taken by the in-situ sensor;
a type of data used as a basis for the predictive stalk diameter map; and
a freshness of data used as a basis for the predictive stalk diameter map.

4. The agricultural harvesting system of claim 1, wherein the confidence system is configured to determine the confidence level of the stalk diameter sensor data based on sensor data confidence criteria (367).

5. The agricultural harvesting system of claim 4, wherein the sensor data confidence criteria (367) includes one or more of:
a harvest state of the worksite along a travel path of the in-situ sensor;
a variance of stalk diameter across a width of a header of the mobile agricultural harvesting machine;
a sensor error state;
one or more characteristics of weeds of the worksite along the travel path of the in-situ sensor; and
a proximity of the in-situ sensor to a boundary of the worksite.

6. The agricultural harvesting system of claim 1, wherein the confidence system selects one of the predictive stalk diameter data or the stalk diameter sensor data as control data based on a comparison (622) of the confidence level of the predictive stalk diameter map to the confidence level of stalk diameter sensor data.

7. The agricultural harvesting system of claim 1, wherein the confidence system compares both the confidence level of the predictive stalk diameter data and the confidence level of the stalk diameter sensor data to a confidence level threshold (624) and selects one of the predictive stalk diameter data or the stalk diameter sensor data as control data based on the comparison.

8. The agricultural harvesting system of claim 7, wherein, when both the confidence level of the predictive stalk dimeter data and the confidence level of the stalk diameter sensor data satisfy the confidence level threshold, then the confidence system selects one of the predictive stalk diameter data or the stalk diameter sensor data based on a preselected preference (626).

9. The agricultural harvesting system of claim 1 and further comprising
a communication system (306) configured to receive an information map (358) that includes values of a characteristic corresponding to different geographic locations in a field;
a predictive map generator (312) that generates, as the predictive stalk diameter data, a functional predictive stalk diameter map (460) of the field that maps predictive stalk diameter values to the different geographic locations in the worksite, based on the value of the characteristic in the information map at a geographic location and a stalk diameter value (440) detected by the in-situ sensor corresponding to the geographic location.

10. The agricultural harvesting system of claim 1, wherein, when the confidence system selects, as the control data, the predictive stalk diameter data, the control system is configured to determine a target deck plate spacing based on a predictive stalk diameter value, in the predictive stalk diameter data, across a width of a header (104) of the mobile agricultural harvesting machine.

11. A computer implemented method of controlling a mobile agricultural harvesting machine (100) comprising:
receiving (610) stalk diameter sensor data generated by an in-situ sensor;
receiving (602) predictive stalk diameter data that indicates predictive stalk diameter values at different geographic locations at a worksite;
determining (612) a confidence level of the predictive stalk diameter data;
controlling (636) a deck plate (1226) of the mobile agricultural harvesting machine based on control data;
**characterized by**:
determining (616) a confidence level of the stalk diameter sensor data;
selecting (620) one of the stalk diameter sensor data or the predictive stalk diameter data as control data based on the confidence level of the stalk diameter sensor data and the confidence level of the predictive stalk diameter data; and
controlling (636) the deck plate (1226) of the mobile agricultural harvesting machine based on the selected control data.

12. The computer implemented method of claim 11, wherein determining the confidence level of the stalk diameter sensor data comprises determining the confidence level of the stalk diameter sensor data based on sensor data confidence criteria (618).

13. The computer implemented method of claim 11, wherein determining the confidence level of the predictive stalk diameter data comprises determining the confidence level of the predictive stalk diameter map based on predictive data confidence criteria (614).

13. The computer implemented method of claim 11, wherein selecting one of the stalk diameter sensor data or the predictive stalk diameter data as control data comprises comparing (622) the confidence level of the stalk diameter sensor data to the confidence level of the stalk diameter map and selecting one of the stalk diameter sensor data or the predictive stalk diameter map as control data based on the comparison.

14. The computer implemented method of claim 11, wherein selecting one of the stalk diameter sensor data or the predictive stalk diameter data as control data comprises comparing (624) the confidence level of the stalk diameter sensor data to a confidence level threshold and comparing the confidence level of the predictive stalk diameter map to the confidence level threshold.

15. The computer implemented method of claim 11 and further comprising:
determining (637), as a target deck plate position, either a deck plate position that accommodates a stalk having the largest predictive stalk diameter value across a width of a header of the mobile agricultural harvesting machine or a deck plate position that accommodates the greatest number of plants across the width of the header, and wherein controlling the deck plate comprises controlling the deck plate based on the determined target deck plate position.

## Patentansprüche

1. Landwirtschaftliches Erntesystem (300), das Folgendes umfasst:
einen in-situ-Sensor (308, 382), der dazu ausgelegt ist, einen Wert eines Stängeldurchmessers an einer Arbeitsstelle zu detektieren und Stängeldurchmessersensordaten (440) zu erzeugen, die indikativ für den detektierten Wert des Stängeldurchmessers sind;
ein Konfidenzsystem (340), das dazu ausgelegt ist, ein Konfidenzniveau von prädiktiven Stängeldurchmesserdaten (357, 460, 461) zu bestimmen (612), wobei die prädiktiven Stängeldurchmesserdaten prädiktive Stängeldurchmesserwerte angeben;
ein Steuersystem (314), das dazu ausgelegt ist, ein Steuersignal zum Steuern einer Position einer Deckplatte (1226) einer mobilen landwirtschaftlichen Erntemaschine (100) basierend auf Steuerdaten zu erzeugen;
**dadurch gekennzeichnet, dass** das Konfidenzsystem (340) ausgelegt ist zum:
Bestimmen (610) eines Konfidenzniveaus der Stängeldurchmessersensordaten; und
Auswählen (620) entweder der prädiktiven Stängeldurchmesserdaten oder der Stängeldurchmessersensordaten als Steuerdaten basierend auf dem Konfidenzniveau der prädiktiven Stängeldurchmesserdaten und dem Konfidenzniveau der Stängeldurchmessersensordaten; und
dass das Steuersystem (314) ausgelegt ist zum Erzeugen des Steuersignals, um die Position der Deckplatte (1226) der mobilen landwirtschaftlichen Erntemaschine (100) basierend auf den ausgewählten Steuerdaten zu steuern.

2. Landwirtschaftliches Erntesystem nach Anspruch 1, wobei die prädiktiven Stängeldurchmesserdaten eine prädiktive Stängeldurchmesserkarte (357, 460) umfassen, die prädiktive Stängeldurchmesserwerte auf unterschiedliche geografische Orte an der Arbeitsstelle abbildet, und wobei das Konfidenzsystem dazu ausgelegt ist, das Konfidenzniveau der prädiktiven Stängeldurchmesserkarte basierend auf Konfidenzkriterien der prädiktiven Daten (367) zu bestimmen.

3. Landwirtschaftliches Erntesystem nach Anspruch 2, wobei die Konfidenzkriterien der prädiktiven Daten (367) eines oder mehrere aus Folgendem umfassen:
eine Anzahl von Sensormesswerten, die vom in-situ-Sensor erfasst werden;
einen Typ von Daten, die als Grundlage für die prädiktive Stängeldurchmesserkarte verwendet werden; und
eine Frische von Daten, die als Grundlage für die prädiktive Stängeldurchmesserkarte verwendet werden.

4. Landwirtschaftliches Erntesystem nach Anspruch 1, wobei das Konfidenzsystem dazu ausgelegt ist, das Konfidenzniveau der Stängeldurchmessersensordaten basierend auf Sensordatenkonfidenzkriterien zu bestimmen (367).

5. Landwirtschaftliches Erntesystem nach Anspruch 4, wobei die Sensordatenkonfidenzkriterien (367) eines oder mehrere aus Folgendem umfassen:
einen Erntezustand der Arbeitsstelle entlang eines Fahrpfades des in-situ-Sensors;
eine Varianz des Stängeldurchmessers über eine Breite eines Erntevorsatzes der mobilen landwirtschaftlichen Erntemaschine;
einen Sensorfehlerzustand;
eine oder mehrere Charakteristiken von Unkraut an der Arbeitsstelle entlang des Fahrpfades des in-situ-Sensors; und
eine Nähe des in-situ-Sensors zu einer Grenze der Arbeitsstelle.

6. Landwirtschaftliches Erntesystem nach Anspruch 1, wobei das Konfidenzsystem entweder die prädiktiven Stängeldurchmesserdaten oder die Stängeldurchmessersensordaten als Steuerdaten basierend auf einem Vergleich (622) des Konfidenzniveaus der prädiktiven Stängeldurchmesserkarte mit dem Konfidenzniveau von Stängeldurchmessersensordaten auswählt.

7. Landwirtschaftliches Erntesystem nach Anspruch 1, wobei das Konfidenzsystem sowohl das Konfidenzniveau der prädiktiven Stängeldurchmesserdaten als auch das Konfidenzniveau der Stängeldurchmessersensordaten mit einer Konfidenzniveauschwelle vergleicht (624) und basierend auf dem Vergleich entweder die prädiktiven Stängeldurchmesserdaten oder die Stängeldurchmessersensordaten als Steuerdaten auswählt.

8. Landwirtschaftliches Erntesystem nach Anspruch 7, wobei, wenn sowohl das Konfidenzniveau der prädiktiven Stängeldurchmesserdaten als auch das Konfidenzniveau der Stängeldurchmessersensordaten die Konfidenzniveauschwelle erfüllen, das Konfidenzsystem entweder die prädiktiven Stängeldurchmesserdaten oder die Stängeldurchmessersensordaten basierend auf einer vorgewählten Präferenz auswählt (626).

9. Landwirtschaftliches Erntesystem nach Anspruch 1, das ferner Folgendes umfasst:
ein Kommunikationssystem (306), das dazu ausgelegt ist, eine Informationskarte (358) zu empfangen, die Werte einer Charakteristik beinhaltet, die unterschiedlichen geografischen Orten in einem Feld entsprechen;
einen prädiktiven Kartengenerator (312), der als die prädiktiven Stängeldurchmesserdaten eine funktionale prädiktive Stängeldurchmesserkarte (460) des Feldes erzeugt, die prädiktive Stängeldurchmesserwerte auf die verschiedenen geografischen Orte an der Arbeitsstelle abbildet, basierend auf dem Wert der Charakteristik in der Informationskarte an einem geografischen Ort und einem Stängeldurchmesserwert (440), der durch den insitu-Sensor detektiert wird, der dem geografischen Ort entspricht.

10. Landwirtschaftliches Erntesystem nach Anspruch 1, wobei, wenn das Konfidenzsystem die prädiktiven Stängeldurchmesserdaten als die Steuerdaten auswählt, das Steuersystem dazu ausgelegt ist, einen Deckplattenzielabstand basierend auf einem prädiktiven Stängeldurchmesserwert in den prädiktiven Stängeldurchmesserdaten über eine Breite eines Erntevorsatzes (104) der mobilen landwirtschaftlichen Erntemaschine zu bestimmen.

11. Computerimplementiertes Verfahren zum Steuern einer mobilen landwirtschaftlichen Erntemaschine (100), das Folgendes umfasst:
Empfangen (610) von Stängeldurchmessersensordaten, die durch einen in-situ-Sensor erzeugt werden;
Empfangen (602) von prädiktiven Stängeldurchmesserdaten, die prädiktive Stängeldurchmesserwerte an verschiedenen geografischen Orten an einer Arbeitsstelle angeben;
Bestimmen (612) eines Konfidenzniveaus der prädiktiven Stängeldurchmesserdaten;
Steuern (636) einer Deckplatte (1226) der mobilen landwirtschaftlichen Erntemaschine basierend auf Steuerdaten;
**gekennzeichnet durch**:
Bestimmen (616) eines Konfidenzniveaus der Stängeldurchmessersensordaten;
Auswählen (620) entweder der Stängeldurchmessersensordaten oder der prädiktiven Stängeldurchmesserdaten als Steuerdaten basierend auf dem Konfidenzniveau der Stängeldurchmesserdensordaten und dem Konfidenzniveau der prädiktiven Stängeldurchmesserdaten; und
Steuern (636) der Deckplatte (1226) der mobilen landwirtschaftlichen Erntemaschine basierend auf den ausgewählten Steuerdaten.

12. Computerimplementiertes Verfahren nach Anspruch 11, wobei das Bestimmen des Konfidenzniveaus der Stängeldurchmessersensordaten das Bestimmen des Konfidenzniveaus der Stängeldurchmessersensordaten basierend auf Sensordatenkonfidenzkriterien (618) umfasst.

13. Computerimplementiertes Verfahren nach Anspruch 11, wobei das Bestimmen des Konfidenzniveaus der prädiktiven Stängeldurchmesserdaten das Bestimmen des Konfidenzniveaus der prädiktiven Stängeldurchmesserkarte basierend auf Konfidenzkriterien der prädiktiven Daten (614) umfasst.

13. Computerimplementiertes Verfahren nach Anspruch 11, wobei das Auswählen entweder der Stängeldurchmessersensordaten oder der prädiktiven Stängeldurchmesserdaten als Steuerdaten das Vergleichen (622) des Konfidenzniveaus der Stängeldurchmessersensordaten mit dem Konfidenzniveau der Stängeldurchmesserkarte und das Auswählen entweder der Stängeldurchmessersensordaten oder der prädiktiven Stängeldurchmesserkarte als Steuerdaten basierend auf dem Vergleich umfasst.

14. Computerimplementiertes Verfahren nach Anspruch 11, wobei das Auswählen entweder der Stängeldurchmessersensordaten oder der prädiktiven Stängeldurchmesserdaten als Steuerdaten das Vergleichen (624) des Konfidenzniveaus der Stängeldurchmessersensordaten mit einer Konfidenzniveauschwelle und das Vergleichen des Konfidenzniveaus der prädiktiven Stängeldurchmesserkarte mit der Konfidenzniveauschwelle umfasst.

15. Computerimplementiertes Verfahren nach Anspruch 11, ferner umfassend:
Bestimmen (637), als eine Deckplattenzielposition, entweder einer Deckplattenposition, die einen Stängel mit dem größten prädiktiven Stängeldurchmesserwert über eine Breite eines Erntevorsatzes der mobilen landwirtschaftlichen Erntemaschine aufnimmt, oder einer Deckplattenposition, die die größte Anzahl von Pflanzen über die Breite des Erntevorsatzes aufnimmt, und wobei das Steuern der Deckplatte Steuern der Deckplatte basierend auf der bestimmten Deckplattenzielposition umfasst.

## Revendications

1. Système de récolte agricole (300) comprenant :
un capteur in situ (308, 382) configuré pour détecter une valeur d'un diamètre de tige sur un site de travail et générer des données de capteur de diamètre de tige (440) indiquant la valeur détectée du diamètre de tige ;
un système de confiance (340) configuré pour déterminer (612) un niveau de confiance de données prédictives de diamètre de tige (357, 460, 461), les données prédictives de diamètre de tige indiquant des valeurs de diamètre de tige prédictives ;
un système de commande (314) configuré pour générer un signal de commande pour commander une position d'une plaque de pont (1226) d'une machine de récolte agricole mobile (100) sur la base de données de commande ;
**caractérisé en ce que** le système de confiance (340) est configuré pour :
déterminer (610) un niveau de confiance des données de capteur de diamètre de tige ; et
sélectionner (620) l'une des données prédictives de diamètre de tige ou des données de capteur de diamètre de tige en tant que données de commande sur la base du niveau de confiance des données prédictives de diamètre de tige et du niveau de confiance des données de capteur de diamètre de tige ; et
**en ce que** le système de commande (314) est configuré pour générer le signal de commande afin de commander la position de la plaque de pont (1226) de la machine de récolte agricole mobile (100) sur la base des données de commande sélectionnées.

2. Système de récolte agricole selon la revendication 1, les données prédictives de diamètre de tige comprenant une carte prédictive de diamètre de tige (357, 460) qui cartographie des valeurs de diamètre de tige prédictives à différents emplacements géographiques dans le site de travail et le système de confiance étant configuré pour déterminer le niveau de confiance de la carte prédictive de diamètre de tige sur la base de critères de confiance de données prédictives (367).

3. Système de récolte agricole selon la revendication 2, les critères de confiance de données prédictives (367) comprenant un ou plusieurs parmi :
un certain nombre de relevés de capteur effectués par le capteur in situ ;
un type de données utilisé comme base pour la carte prédictive de diamètre de tige ; et
une fraîcheur des données utilisées comme base pour la carte prédictive de diamètre de tige.

4. Système de récolte agricole selon la revendication 1, le système de confiance étant configuré pour déterminer le niveau de confiance des données de capteur de diamètre de tige sur la base du critère de confiance de données de capteur (367).

5. Système de récolte agricole selon la revendication 4, le critère de confiance de données de capteur (367) comprenant un ou plusieurs parmi :
un état de récolte du site de travail le long d'un chemin de déplacement du capteur in situ ;
une variation du diamètre de tige sur la largeur d'une barre de coupe de la machine de récolte agricole mobile ;
un état d'erreur du capteur ;
une ou plusieurs caractéristiques des mauvaises herbes du site de travail le long du chemin de déplacement du capteur in situ ; et
une proximité du capteur in situ par rapport à une limite du site de travail.

6. Système de récolte agricole selon la revendication 1, le système de confiance sélectionnant l'une des données prédictives de diamètre de tige ou des données de capteur de diamètre de tige en tant que données de commande sur la base d'une comparaison (622) du niveau de confiance de la carte prédictive de diamètre de tige au niveau de confiance des données de capteur de diamètre de tige.

7. Système de récolte agricole selon la revendication 1, le système de confiance comparant à la fois le niveau de confiance des données prédictives de diamètre de tige et le niveau de confiance des données de capteur de diamètre de tige à un seuil de niveau de confiance (624) et sélectionnant l'une des données prédictives de diamètre de tige ou des données de capteur de diamètre de tige en tant que données de commande sur la base de la comparaison.

8. Système de récolte agricole selon la revendication 7, lorsque le niveau de confiance des données prédictives de diamètre de tige et le niveau de confiance des données de capteur de diamètre de tige satisfont le seuil de niveau de confiance, alors le système de confiance sélectionnant l'une des données prédictives de diamètre de tige ou des données de capteur de diamètre de tige sur la base d'une préférence présélectionnée (626).

9. Système de récolte agricole selon la revendication 1 et comprenant en outre :
un système de communication (306) configuré pour recevoir une carte d'informations (358) qui comporte des valeurs d'une caractéristique correspondant à différents emplacements géographiques dans un champ ;
un générateur de carte prédictive (312) qui génère, en tant que données prédictives de diamètre de tige, une carte prédictive de diamètre de tige fonctionnelle (460) du champ qui met en correspondance des valeurs de diamètre de tige prédictives avec les différents emplacements géographiques du site de travail, sur la base de la valeur de la caractéristique dans la carte d'informations à un emplacement géographique et d'une valeur de diamètre de tige (440) détectée par le capteur in situ correspondant à l'emplacement géographique.

10. Système de récolte agricole selon la revendication 1, lorsque le système de confiance sélectionne, en tant que les données de commande, les données prédictives de diamètre de tige, le système de commande étant configuré pour déterminer un espacement de plaque de pont cible sur la base d'une valeur prédictive de diamètre de tige, dans les données prédictives de diamètre de tige, sur une largeur d'une barre de coupe (104) de la machine de récolte agricole mobile.

11. Procédé mis en œuvre par ordinateur de commande d'une machine de récolte agricole mobile (100) comprenant :
la réception (610) de données de capteur de diamètre de tige générées par un capteur in situ ;
la réception (602) de données prédictives de diamètre de tige qui indiquent des valeurs de diamètre de tige prédictives à différents emplacements géographiques sur un site de travail ;
la détermination (612) d'un niveau de confiance des données prédictives de diamètre de tiges ;
la commande (636) d'une plaque de pont (1226) de la machine de récolte agricole mobile sur la base de données de commande ;
**caractérisé par** :
la détermination (616) d'un niveau de confiance des données de capteur de diamètre de tige ;
la sélection (620) de l'une des données de capteur de diamètre de tige ou des données prédictives de diamètre de tige en tant que données de commande sur la base du niveau de confiance des données de capteur de diamètre de tige et du niveau de confiance des données prédictives de diamètre de tige ; et
la commande (636) de la plaque de pont (1226) de la machine de récolte agricole mobile sur la base des données de commande sélectionnées.

12. Procédé mis en œuvre par ordinateur selon la revendication 11, la détermination du niveau de confiance des données de capteur de diamètre de tige comprenant la détermination du niveau de confiance des données de capteur de diamètre de tige sur la base du critère de confiance de données de capteur (618).

13. Procédé mis en œuvre par ordinateur selon la revendication 11, la détermination du niveau de confiance des données prédictives de diamètre de tige comprenant la détermination du niveau de confiance de la carte prédictive de diamètre de tige sur la base de critères de confiance de données prédictives (614).

13. Procédé mis en œuvre par ordinateur selon la revendication 11, la sélection de l'une des données de capteur de diamètre de tige ou des données prédictives de diamètre de tige en tant que données de commande comprenant la comparaison (622) du niveau de confiance des données de capteur de diamètre de tige au niveau de confiance de la carte de diamètre de tige et la sélection de l'une des données de capteur de diamètre de tige ou de la carte prédictive de diamètre de tige en tant que données de commande sur la base de la comparaison.

14. Procédé mis en œuvre par ordinateur selon la revendication 11, la sélection de l'une des données de capteur de diamètre de tige ou des données prédictives de diamètre de tige en tant que données de commande comprenant la comparaison (624) du niveau de confiance des données de capteur de diamètre de tige à un seuil de niveau de confiance et la comparaison du niveau de confiance de la carte prédictive de diamètre de tige au seuil de niveau de confiance.

15. Procédé mis en œuvre par ordinateur selon la revendication 11 et comprenant en outre :
la détermination (637), en tant que position de plaque de pont cible, soit d'une position de plaque de pont qui reçoit une tige ayant la valeur de diamètre de tige prédictive la plus grande sur une largeur d'une barre de coupe de la machine de récolte agricole mobile, soit d'une position de plaque de pont qui reçoit le plus grand nombre de plantes sur la largeur de la barre de coupe, et la commande de la plaque de pont comprenant la commande de plaque de pont sur la base de la position de plaque de pont cible déterminée.
